# EUROPÄISCHE PATENTSCHRIFT

(11) **EP 2 814 924 B1**
(45) Veröffentlichungstag und Bekanntmachung des Hinweises auf die Patenterteilung: **25.04.2018**
(21) Anmeldenummer: 13705756.8
(22) Anmeldetag: 18.02.2013
(51) Int. Cl.: C11B 3/00, C11B 3/04

(54) **VERFAHREN FÜR DIE ENZYMATISCHE ÖLENTSCHLEIMUNG**
PROCESS FOR ENZYMATIC DEGUMMING OF OIL
PROCÉDÉ POUR LA DÉMUCILAGINATION ENZYMATIQUE D'HUILES

(30) Priorität: 17.02.2012 DE 102012003031
(43) Veröffentlichungstag der Anmeldung: 24.12.2014
(73) Patentinhaber: Clariant Produkte (Deutschland) GmbH, 80333 München (DE)
(72) Erfinder: SOHLING, Ulrich, 85356 Freising (DE); BUBENHEIM, Paul, 22359 Hamburg (DE); SUCK, Kirstin, 80939 München (DE)
(86) Internationale Anmeldenummer: PCT/EP2013/053199
(87) Internationale Veröffentlichungsnummer: WO 2013/121047

(56) Entgegenhaltungen:
- EP-B1- 0 513 709
- WO-A1-2012/079663
- CN-A- 101 659 899

## Beschreibung

Die Erfindung betrifft ein Verfahren zur Entschleimung von rohem Pflanzenöl in wässrigen Phasen, umfassend die Schritte des in-Kontakt-Bringen des rohen Pflanzenöls mit einer Zusammensetzung umfassend ein Phospholipid-spaltendes Enzym und eine α-Amylase und das Abtrennen der Schleimstoffe, wobei das rohe Pflanzenöl vor dem in-Kontakt-Bringen mit der Zusammensetzung mit Wasser und/oder Säure in Kontakt gebracht wird, jedoch vor dem in-Kontakt-Bringen mit der Zusammensetzung keine Abtrennung der wässrigen Phase stattfindet.

Rohöle enthalten Phosphatide, eiweiß- und kohlenhydrathaltige Stoffe, pflanzliche Schleimstoffe sowie kolloidale Verbindungen, die die Haltbarkeit des Öls stark herabsetzen. Diese Stoffe müssen daher entfernt werden.

Unter Schleimphase / Schleimstoffe versteht man hier im folgenden Text die gesamte Gruppe dieser Stoffe, die nach Behandlung mit einer säurehaltigen und/oder wässrigen Lösung aus dem Öl als schwere Phase ausfallen (Bokisch, M, Nahrungsfette und -öle, Handbuch der Lebensmittel-Technologie, Ulmer Verlag, 342-433).

Unter der Raffination von Pflanzenölen versteht man die Entfernung der unerwünschten Begleitstoffe. Man unterscheidet zwischen chemischer und physikalischer Raffination. Die chemische Raffination besteht aus den Prozessen 1. Entschleimung, 2. Neutralisation, 3. Bleichung, 4. Desodorierung. Bei der Entschleimung werden Phospholipide und Metallionen aus dem Öl entfernt. Die Neutralisation dient zur Extraktion der Fettsäuren. Bei der Bleichung werden die Farbstoffe, weitere Metallionen und restliche Schleimstoffe entfernt. Bei der Desodorierung handelt es sich um eine Wasserdampfdestillation, bei der weitere Verbindungen entfernt werden, die den Geruch- und den Geschmack des Öls beeinträchtigen. Bei der physikalischen Raffination wird die Entsäuerung zusammen mit der Desodorierung am Ende des Raffinationsprozesses durchgeführt.

Die Entschleimung der Öle kann durch Extraktion der Phospholipide mit Wasser oder einer wässrigen Lösung einer Säure erfolgen, die Ca²⁺- und Mg²⁺-Ionen komplexiert, wie z.B. Zitronensäure oder Phosphorsäure. Häufig führt man hierbei zunächst eine wässrige, sogenannte Vorentschleimung durch, mit der die wasserlöslichen Phospholipide entfernt werden.

Man spricht hierbei von hydratisierbaren Phospholipiden. Die Thematik der hydratisierbaren und nicht-hydratisierbaren Phospholipide ist beispielsweise beschrieben in Nielsen, K., Composition of difficultly extractable soy bean phosphatides, J. Am. Oil. Chem. Soc. 1960, 37, 217-219 und A.J. Dijkstra, Enzymatic degumming, Eur. J. Lipid Sci. Technol. 2010, 112, 1178-1189. Dabei handelt es sich insbesondere um Phosphatidyl-Cholin und Phosphatidyl-Inositol. Die Behandlung mit verdünnten wässrigen Calcium- und Magnesium-komplexierenden Säuren, wie z.B. Zitronensäure oder Phosphorsäure, führt nach dem Stand der Technik dazu, dass nicht-hydratisierbare Phospholipide in hydratisierbare Phospholipide überführt werden. Man geht davon aus, dass der Mechanismus dieser Reaktion darauf beruht, dass Calciumionen, die verschiedene Phospholipidmoleküle, wie z.B. Phosphatidsäuren an den Phosphatgruppen, überbrücken und stabilisieren, aus dem Öl entfernt werden. Dies führt zur verbesserten Extraktion dieser Phospholipide mit Wasser. Zwar wird durch die wässrige Vorentschleimung und die Behandlung mit wässrigen Säuren bei einigen Ölen, wie z.B. Palmöl, eine hinreichend gute Entschleimung erreicht, für andere Pflanzenöltypen, wie z.B. Canolaöl, Rapsöl oder Sojaöl, führen diese beiden Extraktionsschritte sehr oft zu einer ungenügenden Reduktion der Schleimstoffe. Üblicherweise wünscht man sich hierbei eine Reduktion des Phosphorgehaltes auf 10 oder weniger ppm Phosphor im Öl für Nahrungsmittelanwendungen (nach dem Stand der Technik bestimmt durch ICP/AES-Analyse des Öls). Stärkere Anforderungen werden an den Phosphorgehalt des Öls dann gestellt, wenn die Öle beispielsweise zur Herstellung von Biodiesel eingesetzt werden. Dort ist nach der EU-Norm der Phosphorgehalt des Biodiesels auf 5 ppm begrenzt und es ist zweckmäßig, die Phosphorreduktion bereits ölseitig durchzuführen. Weiterhin ist ein besonders niedriger Phosphorgehalt, d.h. ein Phosphorgehalt, der so niedrig wie möglich ist und möglichst 0 beträgt, dann erforderlich, wenn man die Öle in weiteren Behandlungsschritten entweder für den Nahrungsmitteleinsatz hydriert, d.h. ungesättigte in gesättigte Fettsäuren überführt, oder wenn man nach dem NExBTL-Prozess der Firma Neste eine Hydrierung so durchführt, dass als Endprodukt Alkane, d.h. ein konventioneller Biodieseltreibstoff, jedoch hergestellt aus Pflanzenöl, erhalten werden. Diese Prozesse stellen, wie vorher angeführt, extrem hohe Anforderungen an einen niedrigen Phosphorgehalt im Öl, und der Einsatz solcher Prozesse wird in dem Maße zunehmen wie Pflanzenöle als Rohstoffe für die chemische Industrie eingesetzt werden.

Eine weitere Variante stellt das sog. "caustic refining" dar. Dieses Verfahren wird eingesetzt, um möglichst alle Phospholipide zusammen mit freien Fettsäuren aus dem Öl zu entfernen. Dieser Prozess ist beispielsweise in der WO 08/094847 der Firma Bunge beschrieben. Bei diesem Verfahren wird das rohe oder Wasser-vorentschleimte Öl zunächst mit geringen Mengen an Zitronensäure oder Phosphorsäure vermischt und intensiv gerührt. Hierbei werden, wie vorher schon erläutert, Salze von nicht hydratisierbaren Phospholipiden stärker hydratisierbar gemacht. Dann wird verdünnte Natronlauge hinzugefügt, wobei die Menge so berechnet wird, dass man einen geringen Überschuss gegenüber der zur Neutralisation der freien Fettsäure benötigten Menge erhält. Dadurch werden die Fettsäuresalze gebildet. Durch Absetzen und nachfolgende Zentrifugation wird die Mischung dann aufgetrennt und man erhält eine wässrige Fettsäurelösung als Rückstand, in der sich auch die Phospholipide befinden. Das Öl wird dann nachfolgend nochmals mit enthärtetem Wasser gewaschen. Die NaOH-Behandlung hat den Nachteil, dass teilweise auch Verseifung des Öles eintritt, wodurch dessen Ausbeute erniedrigt wird.

Nach dem Stand der Technik lässt sich eine weitere Reduktion des Phosphorgehaltes im Öl dadurch erzielen, dass man entweder eine Adsorbensbehandlung mit einer Bleicherde oder einem speziellen Kieselgel durchführt oder die Pflanzenöle enzymatisch entschleimt. Die Adsorbensbehandlung weist den Nachteil auf, dass nach der Adsorbensbehandlung Pflanzenöl am Adsorbens verbleibt, welches die Ölausbeute des gesamten Raffinationsprozesses vermindert. Außerdem stellt die gebrauchte Bleicherde "Abfall" dar, für den Entsorgungsmöglichkeiten gefunden werden müssen.

Ein weiterer Nachteil der konventionellen Ölentschleimungsprozesse liegt darin, dass sowohl die wässrige Vorentschleimung als auch die Behandlung mit wässrigen Säuren zu Ölverlusten führen, die dadurch verursacht sind, dass die in das Wasser überführten Phospholipide Emulgatoren darstellen, die einen zwar geringen, aber doch beträchtlichen Teil des Pflanzenöls in der wässrigen Phase emulgieren, wodurch Pflanzenöl verloren geht. Diese Verluste können im Bereich weniger Prozente bezogen auf das ursprünglich eingesetzte Rohöl liegen. Als Faustregel gilt, dass mit je zwei Molekülen Phopholipid etwa ein Triglyceridmolekül emulgiert wird (beschrieben in WO 08/094847).

Die sogenannte enzymatische Entschleimung vermeidet mehrere Nachteile der bestehenden Verfahren bzw. verbessert die Extraktionsverfahren weiter. So entsteht kein zusätzlicher Abfall wie beim Einsatz von Adsorbentien, und es wurde gezeigt, dass bei der enzymatischen Entschleimung die Ölverluste weiter verringert werden können.

Die sogenannte enzymatische Entschleimung wird im Stand der Technik durch den Einsatz von Phospholipasen, insbesondere Phospholipase A1 und A2 oder Phospholipase C oder einer Kombination von Phospholipasen herbeigeführt.

Phospholipasen sind Enzyme, die zur Gruppe der Hydrolasen gehören, die die Esterbindung von Phospholipiden hydrolysieren. Phospholipasen werden nach ihrer Regioselektivität bei Phospholipiden in 5 Gruppen eingeteilt:
Phospholipasen A₁ (PLA₁), die die Fettsäure in der *sn*1-Position unter Bildung des 2-Lysophospholipids abspalten.

Phospholipasen A₂ (PLA₂), die die Fettsäure in der *sn*2-Position unter Bildung des 1-Lysophospholipids abspalten.

Phospholipasen C (PLC), die einen Phosphorsäuremonoester abspalten.

Phospholipasen D (PLD), die die Kopfgruppe abspalten oder austauschen.

Phospholipasen B (PLB), die die Fettsäure sowohl in der *sn*1-Position als auch in der sn2-Position unter Bildung eines 1,2-Lysophospholipids abspalten.

Diese Reaktionen finden immer an der Grenzfläche aggregierter Substrate statt.

Die Verwendung von Phospholipasen, vor allem Phospholipase A, zur Entschleimung von Rohölen ist beispielsweise in der EP 0513709 B1 (sogenannter Enzymax-Prozess der Firma Lurgi, Frankfurt) geschützt. Es wird davon ausgegangen, dass die Abspaltung einer Fettsäure zu einem Lysolecithin führt, welches eine wesentlich geringere Emulgierkapazität für Öl hat und auch eine wesentlich höhere Wasserlöslichkeit besitzt. Dadurch wird sowohl die Ölausbeute erhöht als auch die Wasserlöslichkeit der schwer hydratisierbaren Phospholipide verbessert. Der Artikel von Clausen, Enzymatic oil-degumming by novel microbial phospholipase, Eur. J. Lipid Sci. Technol. 103 (2001) 333-340, beschreibt die Entwicklung und den Einsatz einer Phospholipase A1 zur enzymatischen Ölentschleimung und vergleicht den Einsatz der Phospholipase A1 mit dem Einsatz der Phospholipase A2. Der aktuelle Stand der Technik zur enzymatischen Ölentschleimung ist zusammengefasst in den beiden Artikeln von A.J. Dijkstra, Recent developments in edible oil processing, Eur. J. Lipid Sci. Technol. 2009, 111, 857-864, und dem Artikel von A.J. Dijkstra, Enzymatic degumming, Eur. J. Lipid Sci. Technol. 2010, 112, 1178-1189. Dort werden die Vor- und Nachteile der einzelnen Phospholipasen für die enzymatische Ölentschleimung diskutiert und auch die Vorbehandlungsmethoden mit unterschiedlichen Säuren angeführt.

Die WO 2012079663 beschreibt ein Verfahren zum enzymatischen Abbau von Phosphor-haltigen Verbindungen und Glykosiden, im besonderen Sterylglykoside aus Rohöl oder entschleimtem Öl pflanzlichen oder tierischen Ursprungs, wobei die Zugabe der Phospholipasen und Glucosidasen in einem Schritt durchgeführt wird.

Ein alternatives Konzept zur Ölentschleimung stellen die Systeme der Firma Danisco dar, in denen eine Lipidacyltransferase eingesetzt wird. Dieses Enzym macht aus einem Phospholipid ebenfalls ein Lysophospholipid, überträgt jedoch den Fettsäurerest an ein Sterol in der Ölphase. Die entsprechenden Enzyme und Verfahren zum Einsatz dieser Enzyme sind in der WO 2006/008508 und der WO 2009/081094 beschrieben.

Vom Standpunkt der Ölausbeute aus wäre es am günstigsten für die enzymatische Entschleimung, eine hochwirksame Phospholipase C einzusetzen, die als Produkt ein Diglycerid liefert, welches im Öl löslich ist, und einen Phosphatidylrest, wie z.B. Phosphatidyl-Cholin (ausgehend von Lecithin), welcher sehr gut wasserlöslich ist. Solche Enzyme hat die Firma Verenium in der US 7,226,771 beschrieben. Im Review-Artikel von Dijkstra zum Thema "Enzymatic degumming" wird als Nachteil dieses Systems angeführt, dass es nicht alle Phospholipide umsetzt, sondern lediglich Lecithine, d.h. Phosphatidyl-Cholin und Phosphatidyl-Inositol, während die schwer hydratisierbaren Ethanolamine und Phosphatidsäuren unangetastet bleiben. Dieser Nachteil hat dazu geführt, dass in Folgeentwicklungen die Phospholipase C entweder mit Phospholipasen A oder mit Lipidacyltransferasen kombiniert wurde. Eine Kombination von Phospholipasen A mit Phospholipasen C zur Ölentschleimung ist in der WO 08/094847 beschrieben. In dieser Patentschrift wird angeführt, dass die Mischung von Phospholipase A und Phospholipase C einerseits zu einem synergistischen Effekt bei der Ölausbeute führt, andererseits sich damit sehr niedrige Phosphorgehalte im Öl mit verträglichen Reaktionszeiten einstellen lassen.

Die Kombination von Phospholipase C mit Lipidacyltransferasen ist in der WO 2009/081094 beschrieben. Auch hier wird angeführt, dass die Kombination der Acyltransferase mit der Phospholipase C zu einer Erhöhung der Ölausbeute führt.
Eine weitere Variante der enzymatischen Ölentschleimung stellt die enzymatische Behandlung der abgetrennten Schleimphase dar, nachdem das Öl nach konventionellen Verfahren wie z.B. mit Wasser und/oder Zitronensäure entschleimt wurde. Durch diese Behandlung ist es möglich, einen Teil des in der Schleimphase emulgierten Pflanzenöles wiederzugewinnen. Dieser Prozess ist beispielsweise auch in dem Review-Artikel A.J. Dijkstra, Enzymatic degumming, Eur. J. Lipid Sci. Technol. 2010, 112, 1178-1189 S. 1184 diskutiert. Entsprechende Verfahren sind auch in den folgenden Patentschriften beschrieben:

Die EP 01 624 047 beschreibt eine Wiedergewinnung von Öl aus dem Schleim durch den Einsatz von phospholipolytischen Mitteln, wobei die phospholipolytischen Mittel sowohl Säuren als auch Phospholipasen sein können.
Die WO 2009/081094 beschreibt neben den oben angeführten Aspekten auch die enzymatische Behandlung der abgetrennten Schleimphase mit Acyltransferase und Mischungen aus Acyltransferase und Phospholipase C.

Die WO 2009/088980 beschreibt eine enzymatische Behandlung der "Gums" mit Phospholipase C und Phospolipase A.

Der Aspekt der Nachhaltigkeit des Einsatzes von Phospholipasen gegenüber anderen Entschleimungsmethoden ist schließlich im Artikel L. De Maria & J. Vind & K. M. Oxenbøll & A. Svendsen & S. Patkar, Phospholipases and their industrial applications, Appl Microbiol Biotechnol (2007) 74:290-300 S. 96 und 97 beschrieben. Am Beispiel einer Ölmühle, die von einem konventionellen Entschleimungsprozess auf einen Prozess mit Phospholipase A umgestellt wurde und in der pro Jahr 266 000 t Sojaöl aufgereinigt werden, wurde gezeigt, dass dort pro Jahr 120000 GJ Energie und 12000 t CO₂ Äquivalente eingespart werden können. Die eingesparten CO₂-Äquivalente entsprechen den Emissionen von 1600 durchschnittlichen Erdbewohnern.

Aufgrund der weltweiten Zunahme des Verbrauchs an Speiseöl und der immer stärker werdenden Nutzung von Pflanzenölen als Rohstoffe für die chemische Industrie und als Treibstoff besteht ständig weiterer Bedarf, die Entschleimung von Pflanzenölen und insbesondere die enzymatische Entschleimung von Pflanzenölen weiter zu verbessern. Die Erfinder der vorliegenden Anmeldung haben sich daher die Aufgabe gestellt, Zusammensetzungen für die enzymatische Entschleimung zu entwickeln, mit denen der Phosphorgehalt des zu entschleimenden Öls weiter verringert, die Ölverluste verringert und/oder Reaktionsgeschwindigkeiten der enzymatischen Entschleimung erhöht werden. Gleichzeitig sollen diese Zusammensetzungen zudem auch eine wirtschaftliche Verfahrensführung im großtechnischen Maßstab ermöglichen.

Diese Aufgabe wurde durch ein Verfahren zur Verringerung der Emulgierbarkeit von Pflanzenöl in wässrigen Phasen gelöst, welches folgende Schritte umfasst:
a) in-Kontakt-Bringen des rohen Pflanzenöls mit einer Zusammensetzung umfassend eine erste Enzymkomponente umfassend mindestens ein Phospholipid-spaltendes Enzym sowie eine zweite Enzymkomponente umfassend mindestens ein nicht-Phospholipid-spaltendes Enzym, wobei es sich bei der zweiten Enzymkomponente um eine α -amylase handelt;
b) Abtrennen der Schleimstoffe von dem Pflanzenöl
wobei vor dem in-Kontakt-Bringen gemäß Schritt a) das rohe Pflanzenöl mit Wasser und/oder Säure in Kontakt gebracht wird, jedoch vor Schritt a) keine Abtrennung der wässrigen Phase stattfindet, sondern das vorkonditionierte Rohöl unmittelbar in Schritt a) eingesetzt wird.

Unter dem Begriff "erste Enzymkomponente" wird dabei im Sinne der vorliegenden Erfindung jede Zusammensetzung verstanden, die mindestens ein Phospholipid-spaltendes Enzym enthält bzw. daraus besteht.

Bei dem "Phospholipid-spaltenden Enzym" kann es sich um eine Phospholipase handeln, die in der Lage ist, entweder einen Fettsäurerest oder einen Phosphatidylrest oder eine Kopfgruppe von einem Phospholipid abzuspalten. Desweiteren kann es sich auch um eine sogenannte Acyltransferase handeln, bei der die Abspaltung des Fettsäurerests mit einer Übertragung dieses Restes, gefolgt von einer Esterbildung, mit einem freien Sterol in der Ölphase verbunden ist.

In einer bevorzugten Ausführungsform wird eine Zusammensetzung eingesetzt, bei der die erste Enzymkomponente ausgewählt wird aus der Gruppe bestehend aus Phospholipase A1, Phospholipase A2, Phospholipase C, Phospholipase B, Phospholipase D und Acyltransferase. Typische auf dem Markt befindliche Enzyme aus dieser Gruppe sind die Lecitase®Ultra von Novozymes®, eine Phospholipase A1, Lecitinase® von Novozymes, eine Phospholipase A2, Rohalase® MPL, eine Phospholipase A2 von AB Enzymes, Darmstadt(D), Purifine®, eine Phospholipase C von Elementis, San Diego USA, Lysomax®, Acyltransferase der Firma Danisco. Dabei kann innerhalb der ersten Enzymkomponente auch eine Kombination aus zwei oder mehr der vorgenannten Phospholipid-spaltenden Enzyme eingesetzt werden. Die Enzyme können dabei von einem beliebigen Organismus (z.B. auch isoliert aus einem thermophilen Organismus) oder einer synthetischen Quelle stammen. Es ist im Rahmen der vorliegenden Erfindung auch möglich, dass innerhalb der ersten Enzymkomponente Enzyme gleicher Art eingesetzt werden, die jedoch aus unterschiedlichen Quellen bzw. Spezies stammen. Ebenso sind rekombinant hergestellte, chimäre Fusionsproteine aus zwei oder mehreren verschiedenen Spezies mit enzymatischer Aktivität umfasst.

Unter dem Begriff "zweite Enzymkomponente" wird dabei im Sinne der vorliegenden Erfindung eine α -Amylase verstanden.

Die α -Amylase kann dabei von einem beliebigen Organismus (z.B. auch isoliert aus einem thermophilen Organismus) oder einer synthetischen Quelle stammen. Es ist im Rahmen der vorliegenden Erfindung auch möglich, dass innerhalb der zweiten Enzymkomponente α -Amylasen eingesetzt werden, die jedoch aus unterschiedlichen Quellen bzw. Spezies stammen. Ebenso sind rekombinant hergestellte, chimäre Fusionsproteine aus zwei oder mehreren verschiedenen Spezies mit enzymatischer Aktivität umfasst.

Das Verfahren wird zur Entschleimung von Pflanzenölen bzw. zur Verringerung der Emulgierbarkeit von Pflanzenölen in wässrigen Phasen eingesetzt.

Unter dem Begriff "Vorentschleimung" bzw. "Naßentschleimung" wird eine Behandlung des Rohöls mit Wasser oder einer wässrigen Säurelösung verstanden, um wasserlösliche Phospholipide weitestgehend aus dem Öl zu entfernen. Auch kann im Rahmen einer Vor- bzw. Naßentschleimung nach der Säurezugabe ggf. eine Zugabe von Alkali erfolgen, um die Säure zu neutralisieren. Vor der Enzymzugabe erfolgt die Abtrennung der wässrigen Phase. Nach einer Vorentschleimung wird der Phosphorgehalt im Rohöl von ca. 500-1500 ppm, z.B. für Soja und Raps auf unter 200 ppm im vorentschleimten Öl gesenkt. Durch die Vorentschleimung kann z.B. Lecithin aus der entstandenen Schleimphase gewonnen werden bzw. die Schleimphase als Futtermittel aufgearbeitet werden. Der Nachteil der Abtrennung der wässrigen Phase bzw. der Senkung des Phosphorgehaltes ist jedoch ein Ausbeuteverlust bezüglich des Öls. Die in die wässrige Phase übergehenden Phosphatide wirken emulgierend und führen dazu, dass ein Teil des Öls in der wässrigen Phase emulgiert und mit dieser abgetrennt wird. Anschließend kann das Öl enzymatisch weiterbehandelt werden (,wobei die Enzyme in einem weiteren Schritt abgetrennt werden müssen) .

Unter dem Begriff "Vorkonditionierung" des Öls wird in der folgenden Anmeldung die Zugabe von Wasser bzw. einer wässrigen Säurelösung zu dem unbehandelten Rohöl verstanden. Anschließend wird durch Zugabe von Alkali, z. B. Natronlauge, ein pH-Wert eingestellt, bei dem die folgende enzymatische Reaktion stattfindet. Idealerweise wird der für die Enzymreaktion optimale pH-Wert eingestellt. Dieser ist für die Phospholipid-spaltenden Enzyme ein pH-Wert von 4-5. Anschließend erfolgt jedoch keine Abtrennung der wässrigen Phase, sondern unmittelbar die Zugabe der Enzyme. Die vorhandenden Schleimstoffe verbleiben also vorerst im Öl bzw. in der Emulsion. Die Abtrennung der wässrigen Phase und damit der Enzyme erfolgt erst nach Einwirkung der Enzyme auf das (ggf. vorkonditionierte) Rohöl.

Die Zugabe von Wasser bzw. einer wässrigen Säurelösung und ggf. von Alkali zur Neutralisierung der Säure zum Rohöl erfolgt im Sinne einer Vorkonditionierung, jedoch unterbleibt die Abtrennung der wässrigen Phase vor der Zugabe der Enzyme (im Sinne einer Naßvorentschleimung). Durch den Verzicht auf den Abtrennungsschritt vor der Zugabe der Enyzme ist eine Steigerung der Ölausbeute möglich. Eine Steigerung der Ölausbeute um einen Prozentpunkt hat eine enorme wirtschaftliche Bedeutung, da dieses Prozent ca. 400.000 t Öl entspricht, bezogen auf die jährliche Produktion von Sojaöl. Das erfindungsgemäße Verfahren erlaubt somit die unmittelbare Verwendung von Rohölen aus Soja bzw. Raps mit Phosphorgehalten von 500 bis 1.500 ppm Phosphor. Überdies stellt es eine Vereinfachung des Verfahrens dar, weil der Trennschritt vor Enzymzugabe entfällt.

Bei der Zugabe von Wasser ist Folgendes zu bedenken: Um die Phosphatide aus dem Öl zu entfernen, ist ca. 1 Vol.-% Wasser, bezogen auf das Ölvolumen, erforderlich, um ca. 400 ppm Phosphor zu entfernen. Nach dieser Überlegung ist die Zugabe von ca. 5 Vol.-% Wasser, bezogen auf das Ölvolumen, ausreichend, um auch ein Öl mit hohem Phosphorgehalt vollständig vom Phosphor zu befreien. Allerdings führt eine solche Vorgehensweise dazu, dass das Verfahren unwirtschaftlich wird, weil stets größere Reaktionsvolumina vorgehalten werden müssen. Überdies bedingt ein größeres zugegebenes Wasservolumen einen höheren Trenaufwand und eine geringere Ölausbeute; weniger zugegebenes Wasser bedeutet somit auch eine höhere Ölausbeute. Allgemein soll daher nicht mehr als 4 Vol.-% Wasser, vorzugsweise nicht mehr als 3 Vol.-% Wasser, jeweils bezogen auf das Ölvolumen, zum Öl gegeben werden.

In einer weiteren bevorzugten Ausführungsform werden in dem Raffinationschritt - abgesehen von den im Öl bereits vorhandenen Emulgatoren, wie z.B. Lecithin - keine zusätzichen Emulgatoren, wie z.B. Natriumdocecylsulfat (SDS), zugegeben. Ebenso kommt das erfindungsgemäße Verfahren bevorzugt ohne die Zugabe von Salzen, wie z.B. Calciumchlorid (CaCl₂) aus.

In einer bevorzugten Ausführungsform wird die Enzymaktivität des/der Enzyms/der Enzyme der ersten Enzymkomponente im Bereich von 0,01 bis 6 units/g Öl Öl gewählt, bevorzugter im Bereich von 0,1 bis 3 units/g Öl Öl, besonders bevorzugt im Bereich von 0,2 bis 2,5 units/g Öl und am meisten bevorzugt im Bereich von 0,3 bis 1 units/g Öl. In einer weiteren bevorzugten Ausführungsform wird die Enzymaktivität der zweiten Enzymkomponente im Bereich von 0,01 bis 6 units/g Öl, bevorzugt 0,1 bis 3 units/g Öl, und besonders bevorzugt im Bereich von 0,2 bis 2,5 units/g Öl, und am meisten bevorzugt im Bereich von 0,3 bis 1 units/g Öl gewählt. (Unit: Internationale Einheit für Enzymaktivität; 1 Unit entspricht dem Substratumsatz von 1 µmol/min).

Besonders bevorzugt ist es im Rahmen der vorliegenden Erfindung, Zusammensetzungen einzusetzen, bei denen das Verhältnis der Enzymaktivität der ersten Enzymkomponente zu der Enzymaktivität der zweiten Enzymkomponente im Bereich von 0,01 : 6 units/g Öl bis 6 : 0,01 units/g Öl liegt, bevorzugt im Bereich von 0,1 : 3 units/g Öl bis 3 : 0,1 units/g Öl. Dabei ist es auch bevorzugt, wenn der Anteil der ersten Enzymkomponente und der Anteil der zweiten Enzymkomponente gleich ist, beispielsweise beide Anteile im Bereich von 0,1 bis 0,5 units/g Öl, bevorzugt im Bereich 0,2 bis 0,3 units/g Öl gewählt werden.

Mit der Einhaltung des erfindungsgemäßen Verhältnisses des Phospholipid-spaltenden Enzyms zu α -Amylase läßt sich das Volumen der Schleimphase reduzieren. Dies bedeutet eine Steigerung der Ölausbeute.

Die Enzyme der ersten und/oder zweiten Enzymkomponente können dabei beispielsweise gefriergetrocknet und in entsprechendem Enzympuffer (Standardpuffer für jedes Enzym sind in der Literatur beschrieben) gelöst verwendet werden, z.B. Citratpuffer 0,1 M, pH 5 oder Acetatpuffer 0,1 M, pH 5. In einer bevorzugten Ausführungsform werden die Enzyme in Enzympuffer aufgenommen und dem Rohöl zugesetzt. Um eine bessere Löslichkeit der Enzyme - insbesondere in den Phospholipide enthaltenden Mischungen - zu erreichen, ist auch der Zusatz von organischen Lösungsmitteln möglich. Diese finden Anwendung z.B. in der Auftrennung der Phospholipide und sind in der Literatur beschrieben. Bevorzugt verwendet werden unpolare organische Lösungsmittel wie z.B. Hexan oder Aceton oder Mischungen, bevorzugt in einer Menge von 1 bis 30 Gew.-% (Beispiele möglicher Lösungsmittel sind beschrieben in der EP 1531182 A2).

In einer weiteren bevorzugten Ausführungsform wird die erste und/oder zweite Enzymkomponente in geträgerter Form eingesetzt. Da insbesondere die Phospholipid-spaltenden Enzyme Spezialenzyme sind, deren Preis, gemessen im Vergleich zu Bulk-Enzymen, wie z.B. kohlehydratabbauenden Enzyme (Amylasen, Glucosidasen), relativ hoch ist, ist es im Rahmen der vorliegenden Erfindung bevorzugt, wenn mindestens das/die Phospholipid-spaltende/n Enzym/e der Zusammensetzung in geträgerter Form eingesetzt wird/werden. Im Rahmen der vorliegenden Erfindung bevorzugte Trägermaterialien sind anorganische Trägermaterialien, wie z.B. Kieselgele, Fällungskieselsäuren, Silikate oder Alumosilikate, und organische Trägermaterialien, wie z.B. Methacrylate oder Ionentauscherharze. Die Trägermaterialien erleichtern die Wiederverwertbarkeit der (relativ teuren) Enzyme aus der Öl-Wasser-Emulsion in einem folgenden Verfahrensschritt und tragen zur Wirtschaftlichkeit des Verfahrens bei.

In einer ebenfalls bevorzugten Ausführungsform umfasst die erste und/oder zweite Enzymkomponente ein oder mehrere weitere Bestandteile, besonders bevorzugt ausgewählt aus der Gruppe bestehend aus Citratpuffer und Acetatpuffer.

In besonders bevorzugten Ausführungsformen, die den Rahmen der vorliegenden Erfindung in keinster Weise beschränkt, umfasst die erste Enzymkomponente mindestens ein Enzym, ausgewählt aus der Gruppe bestehend aus Phospholipase A1, Phospholipase A2 und Phospholipase C, und bei der zweiten Enzymkomponente handelt es sich um alpha-Amylase, wobei es sich besonders bevorzugt um gefriergetrocknete Enzyme handelt, die in einem Puffer, ausgewählt aus der Gruppe bestehend aus Citratpuffer oder Acetatpuffer, vorliegen. Am meisten bevorzugt ist es zudem, wenn mindestens das Enzym der ersten Enzymkomponente adsorptiv oder kovalent auf einem Träger gebunden vorliegt, der bevorzugt ausgewählt wird aus der Gruppe bestehend aus anorganischen Trägermaterialien wie z.B. Kieselgele, Fällungskieselsäuren, Silikate oder Alumosilikate und organischen Trägermaterialien wie z.B. Methacrylate oder Ionentauscherharze. Ebenfalls bevorzugt ist es bei dieser besonders bevorzugten Ausführungsform, wenn das Verhältnis der Enzymaktivität der ersten Enzymkomponente zu der Enzymaktivität der zweiten Enzymkomponente im Bereich von 0,01 : 6 units/g Öl bis 6 : 0,01 units/g Öl liegt, bevorzugt im Bereich von 0,1 : 3 units/g Öl bis 3 : 0,1 units/g Öl. Dabei ist es auch bevorzugt, wenn der Anteil der ersten Enzymkomponente und der Anteil der zweiten Enzymkomponente gleich ist, beispielsweise beide Anteile im Bereich von 0,1 bis 0,5 units/g Öl, bevorzugt im Bereich 0,2 bis 0,3 units/g Öl, gewählt werden.

Die Erfinder des vorliegenden Verfahrens haben überraschend herausgefunden, dass eine Kombination der vorstehend definierten Enzymkomponenten (erste und zweite Enzymkomponente) besonders wirkungsvoll und effektiv die Emulgierbarkeit von Pflanzenöl in wässrigen Phasen verringert. Dabei kann das erfindungsgemäße Verfahren besonders vorteilhaft für die Entschleimung von rohem Pflanzenöl oder auch zur Aufbereitung von Pflanzenölschleim eingesetzt werden. Die Schleimphase kann dabei beispielsweise durch ein herkömmliches Entschleimungsverfahren (wie im Rahmen der Anmeldung ebenfalls beschrieben) oder durch das erfindungsgemäße Verfahren, wenn es zur Entschleimung von rohem Pflanzenöl eingesetzt wird, erhalten werden.

Die vorliegende Erfindung betrifft ein Verfahren zur Verringerung der Emulgierbarkeit von Pflanzenöl in wässrigen Phasen

Erstaunlicherweise wurde hierbei gefunden, dass es gelingt, durch die Kombination von Phospholipid-spaltendem Enzym(en) der ersten Enzymkomponente mit α -Amylase der zweiten Enzymkomponente den Phospholipidgehalt des Rohöls gegenüber dem reinen Einsatz von Phospholipid-spaltendem Enzym weiter abzusenken, die Ölausbeute zu erhöhen, die Reaktionsgeschwindigkeit bei der enzymatischen Entschleimung zu erhöhen, das Schleimvolumen zu erniedrigen und/oder die Abtrennbarkeit der gebildeten Schleimphase zu verbessern.

Das Verfahren der vorliegenden Erfindung ist dabei besonders vorteilhaft, da durch den Einsatz einer weiteren Enzymkomponente (zweite Enzymkomponente), wobei es sich um α - Amylase handelt, die Spaltung von weiteren Komponenten, die in der Schleimphase vorhanden sind, erfolgen kann und somit die Wirkung des Phospholipid-spaltenden Enzyms verbessert wird. Durch den Einsatz der zweiten Enzymkomponente kann beispielsweise eine Erniedrigung der Viskosität der Ölschleimphase, eine Erhöhung der Beweglichkeit der Phospholipide infolge der Spaltung von Störkomponenten oder eine bessere Zugänglichkeit der Phospholipide erreicht werden. Auch wird wahrscheinlich die Zugänglichkeit solcher Phospholipid-Moleküle für das Phospholipid-spaltende Enzym erhöht, welche sich an der Grenzfläche Schleimphase/Öl befinden.

Beispielsweise können durch den Einsatz von Glykosidasen Glycolipide aufgespalten werden. Die Klasse der Glycolipide umfasst eine Vielzahl von Verbindungen. Gemäß der Literatur sind jedoch in der Schleimphase bzw. in pflanzlichen Phospholipiden vor allen Dingen Sterylglykoside, Cerebroside und Galactosyllipide enthalten (Selmair, P.L., Koehler, P. in Molecular Structure and Baking Performance of Individual Glycolipid Classes from Lecithins, J. Agric. Food Chem. 2009, 57, 5597-5609). So zeigte sich beispielsweise, dass entfettetes Sojalecithin bis zu 10 % Glycolipide enthält. Dies ist auch in einer anderen Literaturstelle, und zwar in Bueschelberger, H.G., Lecithins, Emulsifiers in Food Technology, Whitehurst, R.J., Ed.; Blackwell Publishing: Oxford, U.K., 2004; pp 1-10, wie auch von Clayton, T.A., Identification of wheat flour lipids by thin-layer chromatography, J. Chromatogr. 1970, 47, 277-281, beschrieben. In einer weiteren Stelle von Pardun, H., Eigenschaften der Pflanzenlecithine, in Pflanzenlecithine; Pardun, H., Ed.; Verlag für chemische Industrie H. Ziolkowsky KG: Augsburg, Germany, 1988; pp 195-202, wird ein Bereich von 6,5 bis 11 % angegeben. Es wird vermutet, dass die Spaltung dieser Moleküle in einen polaren Rest und eine wasserlösliche Kopfgruppe, die sich gegebenenfalls wieder in Öl lösen kann, dazu beiträgt, dass die Phospholipide in konzentrierterer Form in den Mizellen der Schleimphase vorliegen und deshalb schneller von den Phospholipasen umgesetzt werden können. Dieselbe Betrachtung gilt für Phospholipide an der Öl/Schleim-Grenzfläche.

Die verringerte Emulgierkapazität der Lipide der Schleimphase nach Behandlung mit den Glykosid-spaltenden Enzymen trägt zudem dazu bei, dass die Ölausbeute weiter erhöht werden kann. Der Effekt der Polysaccharid- und Zellwandbestandteilspaltenden Enzyme kann dadurch erklärt werden, dass die Phospholipide besser für die Phospholipasen zugänglich werden und dass gegebenenfalls auch die Reaktionsgeschwindigkeit steigt. Das Vorhandensein der Kohlenhydrate wird durch Analysen von Sojalecithin bestätigt, wie z.B. veröffentlicht von Scholfield, C.R., Composition of Soybean Lecithin, JAOCS, vol. 58, no 10 (October 1981), pp 889-892, dass das Rohlecithin auch Kohlenhydrate enthält.

So wirken beispielsweise Zellwandpektine und Polysaccharide zum Teil und weitere Zellwandbestandteile stark verdickend. Die dadurch hervorgerufene Viskositätserhöhung kann unter Umständen die Reaktionsgeschwindigkeit von Phospholipasen herabsetzen. Durch Spaltung dieser Zellwandbestandteile und/oder Polysaccharide in gut wasserlösliche, nicht die Viskosität erhöhende Bruchstücke kann der Effekt der zugesetzten Enzyme auf die Wirksamkeit von Phospholipasen erklärt werden.

Durch das erfindungsgemäße Kombinieren von Phospholipid-spaltenden Enzymen mit α -Amylase ist es möglich, die Dosierung der Phospholid-spaltenden Enzyme, wie z.B. der Phospholipase A1 oder A2 gegebenenfalls kombiniert mit Phospholipase C, zu verringern und so neben den oben angeführten Vorteilen für den Prozess auch Kosten zu sparen. Die α -Amylase, die mit den Phospholipid-spaltenden Enzymen kombiniert wird, ist in der Regel ein kostengünstigeres Enzym als beispielsweise Phospholipasen und in großen Mengen erhältlich. In Kombination mit einer vorteilhaften Reaktionsführung, d.h. Prozessbedingungen, die auf die jeweils verwendeten Enzyme abgestimmt werden, kann das erfindungsgemäße Verfahren hinsichtlich Dauer sowie Energie- und Rohstoffverbrauch weiter verbessert werden.

Erfindungsgemäß werden bevorzugt verwendet: **Phospholipase A₁**, die aus Thermomyces lanuginosus, Fusarium oxysporium, Aspergillus oryzae, Bacillus cereus, Bacillus subtilis, Clostridium perfringens, Listeria monocytogenes, Pseudomonas spezies, Schweinepankreas oder Rinderpankreas stammt; und/oder unabhängig **Phospholipase A₂,** die aus Schweinepankreas, Rinderpankreas, Streptomyces violaceoruber, Naja mossambica, Thermomyces lanuginosus, Fusarium oxysporium, Aspergillus oryzae, Bacillus cereus, Bacillus subtilis, Clostridium perfringens, Listeria monocytogenes oder Pseudomonas spezies stammt; und/oder unabhängig **Phospholipase C**, die aus Bacillus cereus, Clostridium perfringens, Listeria monocytogenes, Thermomyces lanuginosus, Fusarium oxysporium, Aspergillus oryzae, Bacillus cereus oder Pseudomonas spezies stammt; und/oder unabhängig **Phospholipase B**, die aus Thermomyces lanuginosus, Fusarium oxysporium, Aspergillus oryzae, Bacillus cereus, Bacillus subtilis, Clostridium perfringens, Listeria monocytogenes, Pseudomonas spezies, Schweinepankreas oder Rinderpankreas stammt.

Besonders bevorzugt sind Phospholipase A₁ aus Thermomyces lanuginosus oder Fusarium oxysporium, und/oder unabhängig Phospholipase A₂ aus Schweinepankreas, Rinderpankreas, Streptomyces violaceoruber oder Naja mossambica, und/oder unabhängig Phospholipase C aus Bacillus cereus, Clostridium perfringens oder Listeria monocytogenes.

Bezüglich der α -Amylasen sind solche bevorzugt, die α(1-4)glykosidische, α(1-2)glykosidische, α(1-6)glykosidische, β(1-3)glykosidische, β(1-4)glykosidische und/oder β(1-6)glykosidische Bindungen spalten.

Bezüglich der Amylasen sind solche aus Bacillus bzw. Pseudomonas bzw. fungalen Spezies oder aus Pankreas bevorzugt, insbesondere solche aus Bacillus sp., Bacillus subtilis, Bacillus licheniformis, Bacillus megaterium, Bacillus amyloliquefaciens, Bacillus stearothermophilus, Pseudomonas aeroginosus, Pseudomonas fluorescens, Aspergillus oryzae, Aspergillus niger oder Trichoderma reesei.
Für die Entschleimung von Sojaöl ist insbesondere eine Kombination der Phospholipase A₁ aus Thermomyces lanuginosus oder Fusarium oxysporium und/oder der Phospholipase A₂ aus Schweinepankreas oder Rinderpankreas **mit** einer **α**-Amylase aus Bacillus-Species bevorzugt. Für die Entschleimung von Rapsöl ist insbesondere eine Kombination der Phospholipase A₁ aus Thermomyces lanuginosus oder Fusarium oxysporium und/oder der Phospholipase A₂ aus Schweinepankreas oder Rinderpankreas **mit** einer **α**-Amylase aus Bacillus-Spezies oder Aspergillus-Spezies bevorzugt.

Unter dem Begriff "rohes Pflanzenöl" wird hierbei jedes rohe Öl pflanzlichen Ursprungs verstanden. Bevorzugte rohe Öle sind im Rahmen der vorliegenden Erfindung rohes Sojaöl, rohes Rapsöl, rohes Sonnenblumenöl, rohes Olivenöl, rohes Palmöl, rohes Jatrophaöl, rohes Algenöl, rohes Leindotteröl, rohes Baumwollsaatöl, insbesondere rohes Sojaöl, rohes Rapsöl, rohes Jatrophaöl, rohes Leindotteröl und rohes Sonnenblumenöl. Die Bezeichnung "roh" bezieht sich dabei darauf, dass das Öl noch keinem Entschleimungs-, Neutralisations-, Bleichungs- und/oder Desodorierungsschritt unterzogen wurde. Es ist im Rahmen des erfindungsgemäßen Verfahrens auch möglich, dass eine Mischung mehrerer Rohöle eingesetzt wird oder vorbehandelte, z.B. vorkonditionierte oder vorentschleimte Öle mit den Enzymen behandelt werden.

Das "in-Kontakt-Bringen" kann im Rahmen des erfindungsgemäßen Verfahrens auf jede Weise erfolgen, die dem Fachmann als für den erfindungsgemäßen Zweck geeignet bekannt ist. Bevorzugte Arten des in-Kontakt-Bringens ist dabei ein Vermischen des Rohöls und der erfindungsgemäßen Zusammensetzung.

Nach dem in-Kontakt-Bringen des Rohöls mit der erfindungsgemäßen Zusammensetzung wird die Mischung aus Rohöl und Zusammensetzung bevorzugt gerührt, besonders bevorzugt mit einem Flügelrührer bei 200 bis 800 U/min, bevorzugt 250 bis 600 U/min und am meisten bevorzugt bei 300 bis 500 U/min.

Die Temperatur der Mischung liegt während des in-Kontakt-Bringens bevorzugt im Bereich von 15 bis 99 °C, bevorzugter im Bereich von 20 bis 95 °C, weiter bevorzugt von 22 bis 80 °C, ebenfalls bevorzugt von 25 bis 65 °C, weiter bevorzugt von 27 bis 55 °C und am meisten bevorzugt von 30 bis 45 °C. Dabei muss die Temperatur der Mischung immer so gewählt werden, dass die Denaturierungstemperatur der Enzyme nicht überschritten wird, bevorzugt liegt die Temperatur der Mischung mindestens 5 °C unter der Denaturierungstemperatur der Enzyme bzw. der niedrigsten Denaturierungstemperatur der Enzyme. Wobei bei Einsatz von Enzymen, die aus thermophilen Organismen isoliert wurden, grundsätzlich höhere Temperaturen zu bevorzugen sind. Werden im Rahmen der vorliegenden Erfindung ein oder mehrere thermostabile Enzyme eingesetzt, so liegt die Prozesstemperatur bevorzugt im Bereich von 80 bis 120 °C, bevorzugter im Bereich von 85 bis 100 °C. Die Verwendung thermostabiler Enzyme hat den Vorteil, dass somit eine erhöhte Verfahrenstemperatur gewählt werden kann, wodurch die Viskosität des Pflanzenöls verringert wird und das Verfahren insgesamt verkürzt werden kann - auch aufgrund einer erhöhten Reaktionsgeschwindigkeit der Enzyme. Desweiteren erübrigt sich im Falle einer Vorbehandlung, die vorteilhaft ebenfalls bei erhöhten Temperaturen durchgeführt wird, ein anschließendes Abkühlen unterhalb einer niedrigeren Denaturierungstemperatur der eingesetzten Enzyme. Insgesamt führt die Verwendung thermostabiler Enzyme damit zur einer Verfahrensverkürzung und Kostensenkung.

Die Dauer des in-Kontakt-Bringens liegt dabei bevorzugt im Bereich von 1 Minute bis 12 Stunden, bevorzugter von 5 Minuten bis 10 Stunden, ebenfalls bevorzugt von 10 Minuten bis 6 Stunden, weiter bevorzugt von 20 Minuten bis 3 Stunden.

Der pH Wert der Mischung liegt während des in-Kontakt-Bringens bevorzugt im Bereich von pH 3 bis pH 7,5, bevorzugter im Bereich von pH 4 bis pH 6 und besonders bevorzugt im Bereich von pH 4,0 bis pH 5,2.

Das in-Kontakt-Bringen des rohen Pflanzenöls mit der ersten und der zweiten Enzymkomponente der Zusammensetzung kann dabei gleichzeitig, oder auch nacheinander erfolgen. Sofern ein in-Kontakt-Bringen nacheinander erfolgt, ist es im Rahmen der vorliegenden Erfindung bevorzugt, wenn das rohe Pflanzenöl zuerst mit der zweiten Enzymkomponente in Kontakt gebracht wird. In dem Fall, dass das rohe Pflanzenöl zuerst mit der einen Enzymkomponente und dann mit der anderen Enzymkomponente in Kontakt gebracht wird, ist es besonders bevorzugt, wenn nach Zugabe der einen Komponente die Mischung für 30-300 Minuten, bevorzugt 60 bis 240 Minuten, ebenfalls bevorzugt von 70 bis 120 Minuten gerührt wird, bevor eine Zugabe der anderen Komponente erfolgt.

Das "Abtrennen" der Schleimstoffe gemäß Schritt b) des erfindungsgemäßen Verfahrens kann auf jede Weise erfolgen, die dem Fachmann als für den erfindungsgemäßen Zweck geeignet bekannt ist. Bevorzugt erfolgt die Abtrennung jedoch über Zentrifugation oder Filtration, wobei Zentrifugation bevorzugt ist. Bei der Zentrifugation erfolgt eine Phasentrennung der Mischung, sodass das behandelte Pflanzenöl, die Schleimstoffe und die Enzymzusammensetzung in separaten Phasen vorliegen, die leicht voneinander getrennt werden können.

In einer bevorzugten Ausführungsform wird dabei die Phase enthaltend die Schleimstoffe sowie die Phase enthaltend die erfindungsgemäße Zusammensetzung von dem behandelten Öl abgetrennt. Besonders bevorzugt ist es dabei, wenn gleichzeitig mit den Schleimstoffen die erste und/oder zweite Enzymkomponente abgetrennt wird.

Die Enzyme können nach der Abtrennung regeneriert bzw. gereinigt und beispielsweise in einem neuen Aufreinigungsverfahren eingesetzt werden. Auch in diesem Fall ist es ebenfalls günstig, wiederum mit den vorstehend beschriebenen Zusammensetzungen zu arbeiten, entweder indem man die anderen Glykosid-spaltenden Enzyme direkt in Kombination mit geträgerten Phospholipasen oder Lipidacyltransferasen einsetzt oder indem man die Zusammensetzung einsetzt, um den Pflanzenölschleim, der z.B. an geträgerten Phospholipasen anhaftet, zu entfernen, um die geträgerten Enzyme besser in einem neuen Verfahren wiederverwenden zu können.

Eine weitere bevorzugte Ausführungsform der vorliegenden Erfindung betrifft zudem ein Verfahren wie vorstehend beschrieben, weiter umfassend den Schritt
c) erneutes in-Kontakt-Bringen des Pflanzenöls gemäß Schritt b) mit der ersten und/oder zweiten Enzymkomponente.

Das "in-Kontakt-Bringen" erfolgt dabei bevorzugt unter den gleichen Bedingungen wie vorstehend für Schritt a) des erfindungsgemäßen Verfahrens beschrieben. Dabei wird in einer besonders bevorzugten Ausführungsform die erste und/oder zweite Enzymkomponente vor dem erneuten in-Kontakt-Bringen einer Regeneration oder Reinigung unterzogen.

Vor dem in-Kontakt-Bringen gemäß Schritt a) wird das rohe Pflanzenöl mit Wasser und/oder Säure in Kontakt gebracht. Bevorzugte Säuren sind dabei Calcium- und Magnesiumkomplexierende Säuren allein oder in Kombination, wie z.B. Zitronensäure und Phosphorsäure. Man spricht hier von einer sogenannten "Vorkonditionierung".

In einer bevorzugten Ausführungsform des erfindungsgemäßen Verfahrens erfolgt das in-Kontakt-Bringen mit Wasser bei einer Temperatur zwischen 30°C bis 90°C für 15 bis 60 Minuten, bevorzugt 30 bis 60 Minuten, wobei eine Temperatur von 35 bis 85 °C bevorzugt und eine Temperatur von 40 bis 80 °C besonders bevorzugt ist. Das in-Kontakt-Bringen mit Säure, insbesondere Zitronensäure oder Phosphorsäure, erfolgt im Rahmen des erfindungsgemäßen Verfahrens bevorzugt bei einer Temperatur zwischen 30°C bis 90°C für 5 bis 60 Minuten, bevorzugt 15 bis 60 Minuten, wobei eine Temperatur von 35 bis 85 °C bevorzugt und eine Temperatur von 40 bis 80 °C besonders bevorzugt ist. In einer bevorzugten Ausführungsform wird nach der Säurebehandlung ein Neutralisationsschritt mit einer entsprechenden Base erfolgen, um einen pH-Wert von 3,5 bis 8,0, bevorzugt von 4 bis 7 zu erreichen. Die Zusammensetzung wird dabei direkt zu dem Pflanzenöl gegeben wird, ohne dass zuvor ein Abtrennungsschritt durchgeführt wurde.

Vor Zusatz der Phospholipase(n) und/oder weiterer Enzyme muss jedoch dafür gesorgt werden, dass die Reaktionstemperatur den optimalen Temperaturbereich des Enzyms nicht übersteigt um ein Denaturieren des Enzyms zu verhindern. Temperaturen zwischen 35 bis 65 °C, besser zwischen 45 bis 55 °C, sind geeignet, wobei durch Einsatz von Enzymen aus thermophilen Organismen, also besonders temperaturstabilen Enzymen, ein Einsatz bei 80 bis 100 °C möglich ist, so dass zwischen dem in-Kontakt-Bringen des rohen Pflanzenöls mit Wasser und/oder Säure und dem in-Kontakt-Bringen mit der Zusammensetzung keine Temperaturabsenkung erfolgen muss. Eine Erhöhung der Temperaturstabilität kann auch durch eine Immobilisierung der Enzyme der Enzymkomponenten erreicht werden. Da viele Enzyme eine gewisse Toleranz gegenüber organischen Lösungsmitteln aufweisen (Faber, K., Biotransformations in Organic Chemistry (2001), Springer-Verlag, Heidelberg), können im Rahmen der vorliegenden Erfindung auch dementsprechend vorbehandelte Öle oder Schleime mit den Enzymen behandelt werden.

In besonders bevorzugten Ausführungsformen, die den Rahmen der vorliegenden Erfindung in keinster Weise beschränken, umfasst das Verfahren der vorliegenden Erfindung die Schritte

Bevorzugte Ausführungsform A)
a) in-Kontakt-Bringen des rohen Pflanzenöls ausgewählt aus Sojaöl und/oder Rapsöl mit einer Zusammensetzung umfassend eine erste Enzymkomponente mit mindestens einem Enzym ausgewählt aus der Gruppe bestehend aus Phospholipase A1, Phospholipase A2 und Phospholipase C und eine zweite Enzymkomponente wobei es sich um α-Amylase handelt;
b) Abtrennen der Schleimstoffe von dem Pflanzenöl durch Zentrifugationwobei vor Schritt a) des Verfahrens eine sogenannte Vorkonditionierung durchgeführt, indem das rohe Öl in einem eigenen Verfahrensschritt mit einer Menge von 1,5 bis 3 ml/L Öl an organischer Säure, bevorzugt Zitronensäure, vermischt wird. Die Temperatur der Mischung wird hierbei bevorzugt auf 35 bis 60 °C eingestellt, besonders bevorzugt 48 °C. Nach einer Reaktionszeit von 30 Minuten bis 2 Stunden, bevorzugt 1 Stunde, wird die Mischung durch Zugabe einer stöchiometrischen Menge Lauge, bevorzugt Natronlauge, in einer Menge von bevorzugt 0,5 bis 2 Mol/l, besonders bevorzugt 1 Mol/l, auf einen pH von 5 eingestellt. Erst danach wird gemäß Schritt a) des erfindungsgemäßen Verfahrens weiter verfahren.

Bevorzugte Ausführungsform B)
a) in-Kontakt-Bringen des rohen Pflanzenöls ausgewählt aus Sojaöl und/oder Rapsöl mit einer Zusammensetzung umfassend eine erste Enzymkomponente mit mindestens einem Enzym ausgewählt aus der Gruppe bestehend aus Phospholipase A1, Phospholipase A2 und Phospholipase C und eine zweite Enzymkomponente wobei es sich um α-Amylase handelt, wobei es besonders bevorzugt ist, wenn das mindestens eine Enzym der ersten Enzymkomponente auf einem Träger immobilisiert vorliegt;

Das in-Kontakt-Bringen erfolgt dabei bevorzugt bei einer Temperatur von 70 bis 100 °C, bevorzugter 75 bis 85 °C, und unter Verwendung ausschließlich thermostabiler Enzyme bzw. von Enzymen, deren Denaturierungstemperatur mindestens 1 °C, bevorzugt 5 °C, oberhalb der Prozesstemperatur liegt.

Dabei wird vor Schritt a) des Verfahrens eine Vorkonditionierung durchgeführt, indem das rohe Öl in einem eigenen Verfahrensschritt mit einer Menge von 1,5 bis 5 ml/L Öl an organischer Säure, bevorzugt 1,5 bis 2 ml/L Öl Zitronensäure, vermischt wird. Die Temperatur der Mischung wird hierbei bevorzugt auf 35 bis 60 °C eingestellt, besonders bevorzugt 48 °C. Nach einer Reaktionszeit von 30 Minuten bis 2 Stunden, bevorzugt 1 Stunde, wird die Mischung durch Zugabe einer Lauge, bevorzugt Natronlauge, in einer Menge von bevorzugt 0,5 bis 2 Mol/l, besonders bevorzugt 1 Mol/l, konditioniert. Erst danach wird gemäß Schritt a) des erfindungsgemäßen Verfahrens weiter verfahren.
b) Abtrennen der Schleimstoffe von dem Pflanzenöl durch Zentrifugation.

Zudem lassen sich etwaige, noch im Pflanzenöl gelöste und durch die Phospholipasen nicht gespaltene Phosphatidsäuren weiter reduzieren, indem der Ca- und/oder Mg-Gehalt des gemäß dem Verfahren der vorliegenden Erfindung behandelten Öls reduziert wird. Daher werden die oben angeführten, bevorzugten Ausführungsformen des erfindungsgemäßen Verfahrens in besonders bevorzugten Ausführungsformen noch durch einen Folgeschritt ergänzt, bei dem durch nochmalige Zugabe von Komplexierungsmitteln wie z.B. Zitronensäure oder Phosphorsäure der Gehalt an zweiwertigen Ionen und parallel dazu der Gehalt an P im Öl weiter reduziert wird.

Mit dem erfindungsgemäßen Verfahren ist es möglich, den Phosphorwert in dem rohen Pflanzenöl stark abzusenken. Dabei wird der Phosphorwert auf unter 20 ppm gesenkt, besonders bevorzugt auf unter 10 ppm, ganz besonders bevorzugt auf unter 4 ppm Phosphor.

Weiterhin ist es mit dem erfindungsgemäßen Verfahren möglich, den Calcium- und Magnesiumgehalt des rohen Pflanzenöls auf unter 20 ppm zu senken, besonders bevorzugt auf unter 15 ppm, ganz besonders bevorzugt auf unter 10 ppm, ebenfalls bevorzugt auf unter 8 ppm und am meisten bevorzugt auf unter 4 ppm. In einer ganz besonders bevorzugten Ausführungsform wird der Calcium- und Magnesiumgehalt auf unter 3 ppm gesenkt.

### Methoden

Es wurden folgende Analysenmethoden verwendet:

### Bestimmung des Phosphorgehaltes in den Pflanzenölen

Die Bestimmung von Phosphor erfolgte durch ICP gemäß DEV E-22.

### Bestimmung des Calcium- und Magnesiumgehaltes in den Pflanzenölen

Die Bestimmung von Phosphor erfolgte durch ICP gemäß DEV E-22.

### Bestimmung des Gehalts freier Fettsäuren (FFA)

Bestimmt wird der Gehalt freier Fettsäuren über den Verbrauch an Natriumhydroxid oder Kaliumhydroxid über eine Verseifungsreaktion. Erhalten wird der prozentuale Gehalt freier Fettsäuren im untersuchten Öl. Die Bestimmung erfolgte gemäß DIN 53402 (Methode DGF C-V 2).

### Bestimmung des Schleimvolumens

Mithilfe dieser Bestimmung wird die im Öl enthaltene Schleimphase von enzymatisch unbehandeltem und enzymatisch behandeltem Schleim gemessen. Ein 10 mL Schleuderglas wird auf die Arbeitstemperatur des Reaktionsansatzes erwärmt, die Proben (2X 2 mL) werden eingefüllt und temperiert mindestens 4 Minuten bei 3000 rpm zentrifugiert um die Schleimphase vom Öl zu trennen. Von der oberen Ölphasen werden Proben für die Analytik entnommen. Zu Dokumentationszwecken wird das Ergebnis der Phasenbildung zusätzlich fotografiert.

### Bestimmung des Ölgehaltes in der Schleimphase

Die Bestimmung des Restölgehaltes in der Schleimphase erfolgt nach der Soxhlett Extraktion gemäß DIN ISO 659.

### Variante 1:

Die zu behandelnde Menge Rohöl, 400 bis 500 g, wird in einen Duran Reaktor DN120 1000 mL eingefüllt und Proben für die Analytik werden abgenommen. Das Öl im Duranreaktor wird mit Hilfe einer Heizplatte auf eine Temperatur von 35 bis 60 °C, insbesondere 48 °C, aufgeheizt, wobei eine Temperatur eingehalten werden muss, bei welcher das Enzym nicht denaturiert. Nachdem die Temperatur erreicht ist, wird mit der Vorkonditionierung begonnen. Dafür wird eine definierte, von der Ölmenge abhängige Menge verdünnter Zitronensäure, (z.B. 450 ppm, 1,372 mL), zum Öl zudosiert. Anschließend wird die Mischung mit einem Ultraturrax für 1 Minute durchmischt. Als Alternative wird unter Rühren bei etwa 600 rpm 1 Stunde inkubiert, um die Reaktion der Säure abzuwarten. Anschließend wird eine definierte Menge Natronlauge (1 Mol/L, Restmenge zu 2 % v/v, bzw. 3 % v/v abzüglich Wasser aus Säurezugabe und Enzymzugabe) zugegeben und es wird weitere 10 Minuten unter Rühren inkubiert. An dieser Stelle erfolgt die Zugabe des Enzyms, der Enzym-Mischung oder des Immobilisats, vorzugsweise gelöst in Puffer. Das Enzym wird untergerührt, wofür die Rührerdrehzahl kurzzeitig erhöht werden kann (1 Minute auf 900 rpm), anschließend wird bei niedrigerer Drehzahl weitergerührt.

Die Probenahme erfolgt in definierten Zeitabständen. Die Probe wird mit Hilfe einer Pipette abgenommen, in ein temperiertes Schleuderglas eingefüllt (Temperatur des Reaktionsansatzes) und temperiert mindestens 4 Minuten bei 3000 rpm zentrifugiert um die Schleimphase vom Öl zu trennen. Zu Dokumentationszwecken wird das Ergebnis der Phasenbildung fotografiert, vom Überstand werden Proben zur Bestimmung des Phosphor-, Calcium- und Magnesiumgehaltes abgenommen.

### Variante 2:

In einer weiteren Durchführung werden Phospholipasen und zusätzliche Enzyme in einer geeigneten Kombination als freie Enzyme oder immobilisierte Enzyme zusammen mit einer wässrigen Phase (Enzym-Puffer, pH 5) 0,05 bis 5 % w/v, dem Rohöl zugesetzt. Die Emulsion, bestehend aus Wasser, Enzym, eventuell Enzymträgern und Öl, wird durchmischt. Idealerweise wird die Reaktion temperiert zwischen 20 bis 70 °C, besser zwischen 40 bis 65 °C durchgeführt. Anschließend wird die Phasentrennung abgewartet, die Feststoffe setzen sich ab oder können nach einem dem Fachmann bekannten Standardverfahren z.B. über Zentrifugation oder Filtration entfernt werden. Als Nachbehandlung kann das Öl mit verdünnter Säure (z.B. Zitronensäure) oder Lauge nach einem dem Fachmann als "Degumming" bekannten Verfahren restentschleimt werden.

### Variante 3:

In einer weiteren Durchführung wird die Schleimphase mit Enzymen behandelt. Der Schleimphase, welcher nach einem dem Fachmann als "degumming" bekannten Verfahren erhalten wird, werden neben Phospholipasen, weitere Enzyme zugesetzt. Diese können sich gelöst in einer wässrigen Phase oder suspendiert in einem organischen Lösungsmittel befinden. Der Ansatz wird idealerweise auf eine Temperatur zwischen 20 bis 70 °C temperiert, besser auf eine Temperatur zwischen 35 bis 60 °C. Der Ansatz wird durchmischt bis der Prozess abgeschlossen ist. Dies kann durch Viskositätsmessungen überprüft werden oder visuell, durch Auflösen der ansonsten festen Schleimphase. Durch Zentrifugation lässt sich eine Phasenseparation erreichen, die einzelnen Phasen können abgetrennt werden. In der Regel besteht die obere Phase aus dem gewonnenen Öl, die mittlere Phase aus den Phospholipiden und die untere Phase ist eine wässrige Phase und enthält die Enzyme. Durch Wiederverwendung der wässrigen Phase lassen sich die Enzyme recyceln und wiederverwenden. Je nach Gehalt zweiwertiger Ionen muss das Öl oder die das Enzym enthaltende Wasserphase durch Zusatz von Komplexierungsmitteln vor der weiteren Verwendung von den Ionen bereinigt werden.

### Variante 4:

In einer weiteren Durchführung wird das Rohöl auf eine hohe Temperatur gebracht, vornehmlich 70 bis 100 °C, genauer 75 bis 85 °C. Das Rohöl wird nach dem oben beschriebenen Verfahren mit Säure und Lauge konditioniert, die Temperatur wird beibehalten und es werden thermostabile Enzyme zusetzt. Im Weiteren wird wie bereits beschrieben fortgefahren. Das Enzym wird untergerührt, wofür die Rührerdrehzahl kurzzeitig erhöht werden kann (z.B. 1 Minute auf 900 rpm), anschließend wird bei 600 rpm weitergerührt, bis die Reaktion beendet ist. Die Abtrennung der Schleimphase kann wie vorhergehend beschrieben erfolgen.

### Beispiele und Figuren:

Die Erfindung wird im Weiteren an Hand von Figuren und Beispielen näher erläutert. Es wird hierbei betont, dass die Beispiele und Figuren lediglich veranschaulichenden Charakter besitzen und besonders bevorzugte Ausführungsformen der vorliegenden Erfindung veranschaulichen. Weder Beispiele noch Figuren beschränken den Rahmen der vorliegenden Erfindung.

### Es zeigen:

- Fig. 1: Sojaöl: Vorkonditionierung mit 2 % Gesamtwasseranteil
- Fig. 2: Sojaöl: Vorkonditionierung mit Zugabe von Enzym PLA1 0,3 Units/g Öl und 2 % Gesamtwasseranteil
- Fig. 3: Sojaöl: Vorkonditionierung mit Zugabe von Enzym PLA1 0,3 Units/g Öl und dem Enzym α-Amylase *Bacillus spec* 1 Unit/g Öl, 2 % Gesamtwasseranteil
- Fig. 4: Sojaöl: Vorkonditionierung mit Zugabe von Enzym PLA1 0,3 Units/g Öl und dem Enzym Mannanase 0,3 Unit/g Öl, 2 % Gesamtwasseranteil (nicht erfindungsgemäß)
- Fig. 5: Rapsöl: Vorkonditionierung mit 3 % Gesamtwasseranteil
- Fig. 6: Rapsöl: Vorkonditionierung mit Zugabe von Enzym PLA1 0,3 Units/g Öl und 3 % Gesamtwasseranteil
- Fig. 7: Rapsöl: Vorkonditionierung mit Zugabe von Enzym PLA1 0,3 Units/g Öl und dem Enzym Amylase PET 1 Unit/g Öl, 3 % Gesamtwasseranteil
- Fig. 8: Rapsöl: Vorkonditionierung mit Zugabe von Enzym PLA1 0,3 Units/g Öl und dem Enzym α-Amylase *Aspergillus* 1 Unit/g Öl, 3 % Gesamtwasseranteil

### Beispiel 1:

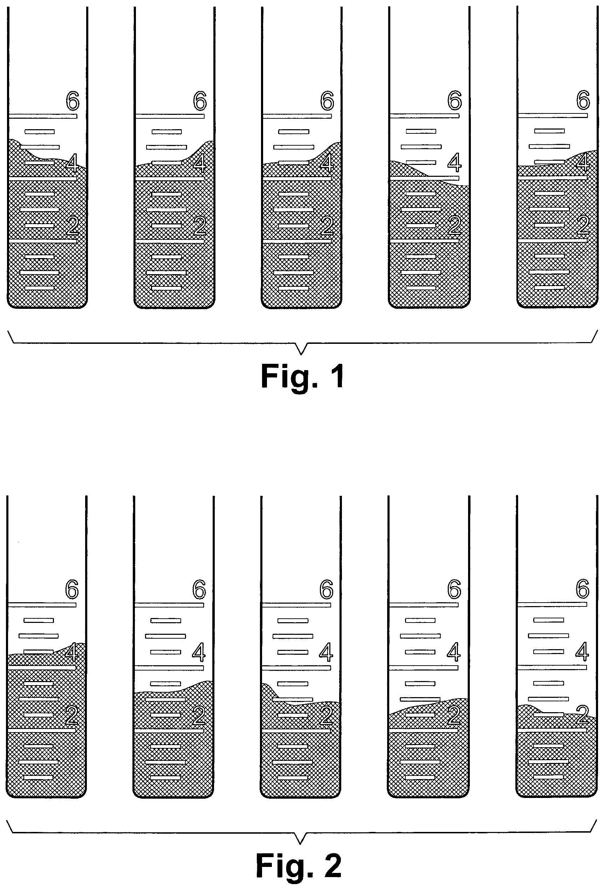

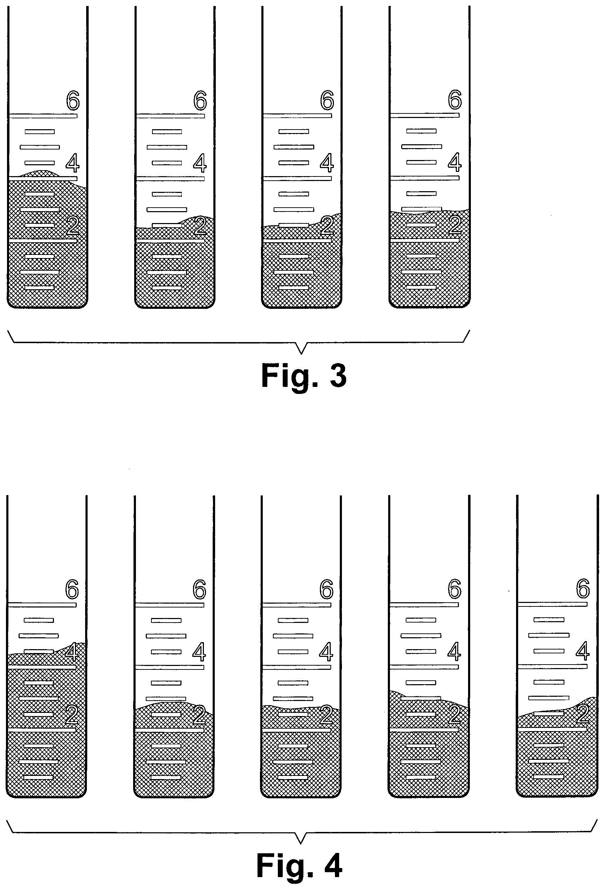

Gemäß Reaktionsvariante 1 wurde ein Sojaöl mit folgenden Ausgangsgehalten verwendet: Phosphor 700 ppm, Calcium 65,6 ppm, Magnesium 62,6 ppm und einem Gehalt an freien Fettsäuren von 1 %. Das Rohöl wurde einer Vorkonditionierung mit Hilfe von wässriger Zitronensäure (450 ppm) und wässriger Natronlauge (1 Mol/L) unterzogen. Es wurden regelmäßig Proben genommen (siehe Tabelle 1). Als Vergleich wurde eben diese Vorkonditionierung mit Zugabe eines Enzyms, Phospholipase A1 aus dem Organismus *Thermomyces lanuginosus* (Sigma-Aldrich), durchgeführt (siehe Figur 2, Tabelle 2). In Figur 3, Tabelle 3 sind Ergebnisse der Vorkonditionierung mit Zusatz des Enzyms PLA1 und eines weiteren Enzyms, einer α-Amylase aus dem Organismus *Bacillus spec.* (Sigma-Aldrich) dargestellt. In Figur 4, Tabelle 4 wieder derselbe Prozess unter Zusatz des Enzyms PLA1 und eines weiteren Enzyms, einer Mannanase (ASA-Spezialenzyme). Figur 4 und Tabelle 4 zeigen ein nichterfindungsgemäßes Beispiel.

**Tab. 1 Vorkonditionierung mit 2 % Gesamtwasseranteil, Phosphor-, Calcium-, Magnesium- und FFA Gehalt**

| **Zeit [min]** | **10** | **60** | **120** | **180** | **240** |
|---|---|---|---|---|---|
| **Ca [ppm]** | **7,8** | **8,8** | **9,3** | **9,7** | **9,8** |
| **Mg [ppm]** | **4,1** | **3,2** | **3,1** | **3,3** | **3,2** |
| **P [ppm]** | **33** | **20** | **18** | **20** | **21** |
| **FFA [%]** | **0,75** | | | **0,76** | **0,78** |
| **Schleimphase [%]** | **4,5** | **4,5** | **4,5** | **4,0** | **4,0** |

**Tab. 2 Vorkonditionierung mit Zugabe von PLA1 aus Thermomyces lanuginosus 0,3 Units/g Öl und 2 % Gesamtwasseranteil, Phosphor-, Calcium-, Magnesium- und FFA Gehalt**

| **Zeit [min]** | **10** | **60** | **120** | **180** | **240** |
|---|---|---|---|---|---|
| **Ca [ppm]** | **9,6** | **9,9** | **9,3** | **8,1** | **7** |
| **Mg [ppm]** | **4,4** | **3,2** | **3,6** | **3** | **2,2** |
| **P [ppm]** | **23** | **14** | **18** | **15** | **10** |
| **FFA [%]** | **0,79** | | | **1,24** | **1,32** |
| **Schleimphase [%]** | **4,8** | **3,0** | **2,8** | **2,5** | **2,5** |

**Tab. 3 Vorkonditionierung mit Zugabe von PLA1 0,3 Units/g Öl und α-Amylase aus Bacillus spec. 1 Unit/g Öl, 2 % Gesamtwasseranteil, Phosphor, Calcium-, Magnesium- und FFA Gehalt**

| **Zeit [min]** | **10** | **60** | **120** | **180** | **240** |
|---|---|---|---|---|---|
| **Ca [ppm]** | **4,1** | **7,1** | **5,6** | **4,8** | **4,1** |
| **Mg [ppm]** | **1,9** | **2,2** | **1,8** | **1,6** | **1,4** |
| **P [ppm]** | **13** | **11** | **9,4** | **8,9** | **6,2** |
| **FFA [%]** | **0,86** | | | **1,19** | **1,16** |
| **Schleimphase [%]** | **4,0** | **2,5** | **2,5** | | **2,5** |

**Tab. 4 Vorkonditionierung mit Zugabe von PLA1 0,3 Units/g Öl und Mannanase 0,3 Unit/g Öl, 2 % Gesamtwasseranteil, Phosphor, Calcium-, Magnesium- und FFA Gehalt (nicht erfindungsgemäß)**

| **Zeit [min]** | **10** | **60** | **120** | **180** | **240** |
|---|---|---|---|---|---|
| **Ca [ppm]** | **5,6** | **6** | **5,4** | **4,6** | **4,3** |
| **Mg [ppm]** | **3,5** | **2,3** | **2,1** | **1,8** | **1,7** |
| **P [ppm]** | **27** | **14** | **13** | **12** | **11** |
| **FFA [%]** | **0,75** | | | **1,19** | **1,24** |
| **Schleimphase [%]** | **4,5** | **2,8** | **2,6** | **2,5** | **2,5** |

Wie aus Figur 1 ersichtlich ist, führt die Anwendung von Säure und Lauge auf das Rohöl als Vorkonditionierung zu einem nicht unerheblichen Volumens der Schleimphase, welches in der Folge trotz Einsatz eines Rührers bei 600 rpm nicht wesentlich abnimmt. Das einzelne Foto entspricht dabei einer Probennahme, die Probenahmen erfolgen zu den Zeitpunkten 10, 60, 120, 180 und 240 Minuten (jeweils von links nach rechts). In Tabelle 1 sind die zugehörigen analytischen Daten aufgeführt, der Phosphorgehalt sank nach 240 Minuten von 33 ppm auf 21 ppm, die Konzentration der zweiwertigen Ionen Calcium und Magnesium nimmt im Fall des Calciums von 7,8 ppm auf 9,8 ppm leicht zu, die Konzentration des Magnesiums sinkt von 4,1 ppm auf 3,2 ppm im Verlauf der Reaktion. Der Gehalt freier Fettsäuren bleibt nahezu unverändert. Die Vorkonditionierung dient als Vorbereitungsreaktion zur Ölentschleimung und gleichzeitig als Referenzbehandlung.

In Figur 2 ist bei Verwendung des Enzyms Phospholipase A1 aus *Thermomyces lanuginosus* (Sigma-Aldrich) eine Abnahme der Schleimphase im Verlauf der Reaktion erkennbar (je Messung/ Probenahme ein Foto). Die zugehörigen Daten und die Zeitpunkte der Probenahme sind in Tabelle 2 dargestellt. Aus Tab. 2 ergibt sich eine Abnahme der Calciumkonzentration von 9,6 ppm auf 7 ppm, eine Abnahme der Magnesiumkonzentration von 4,4 ppm auf 2,2 ppm und eine Abnahme des Phosphorgehalts von 23 ppm auf 10 ppm, der Gehalt freier Fettsäuren steigt von 0,79 % auf 1,32 % an. Aus dem Anstieg im Gehalt der freien Fettsäuren und der Abnahme des Phosphorgehalts lässt sich schließen, dass die PLA1 enzymatisch aktiv ist und folglich die Ölentschleimung erfolgreich funktioniert. Die Zunahme der freien Fettsäure ist ein Zeichen für die Aktivität der PLA1, welche die Fettsäuren aus den Phospholipidmolekülen abspaltet und auch die Schleimphase nimmt kontinuierlich ab. Um für das Öl eine breitere Anwendungspalette zu erschließen, ist es das Ziel, den Phosphorgehalt weiter zu senken.

In Figur 3 ist das Volumen der Schleimphase eines mit PLA1 und zusätzlich mit alpha-Amylase *Bacillus spec.* (Sigma-Aldrich) behandelten vorkonditionierten Rohöls dargestellt. Aus den dazugehörigen analytischen Daten aus Tabelle 3 ist ersichtlich, dass erstaunlicherweise bereits nach 60 Minuten eine reduzierte Schleimphase von 2,5 % erreicht wird. Zusätzlich steigt der Gehalt freier Fettsäuren von 0,86 % auf 1,16 % an und weist damit auf die Aktivität der Phospholipase hin. Der Phosphorgehalt ist von 700 ppm im Rohöl auf 13 ppm und schließlich nach 240 Minuten auf 6,2 ppm gesunken. Die Konzentration des Calciums schwankt leicht, das Magnesium nimmt geringfügig ab.

In Figur 4 und Tabelle 4 (nicht erfindungsgemäß) sind Experimentaldaten bei Verwendung einer weiteren Enzymkombination dargestellt. Verwendet wurde wieder die Phospholipase A1 und eine Mannanase (ASA-Spezialenzyme). Aus den Daten ist ersichtlich, dass bereits nach 60 Minuten eine starke Reduktion der Schleimphase erfolgt ist. Der Gehalt freier Fettsäuren nimmt von 0,75 % auf 1,24 % zu, der Phosphorgehalt sinkt von 700 ppm im Rohöl über 27 ppm (10 Minuten-Probe) auf 11 ppm nach 240 Minuten Behandlung mit beiden Enzymen. Auch die Konzentrationen an zweiwertigen Ionen nehmen über den gesamten Verlauf der Reaktion ab. Die Ergebnisse belegen, dass es erstaunlicherweise durch Zusatz eines weiteren Glykosid-spaltenden Enzyms zu einer schnelleren und stärkeren Reduktion der Schleimphase kommt.

### Beispiel 2:

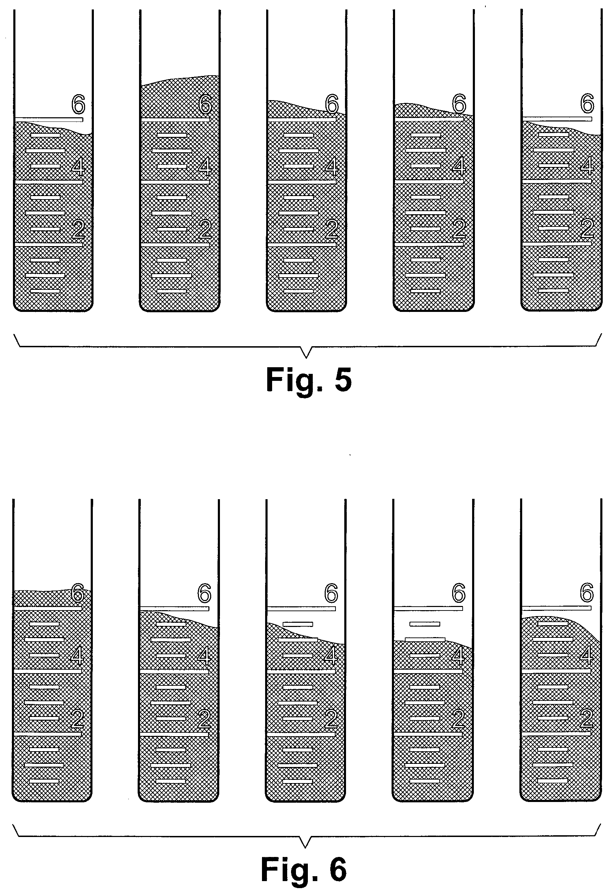

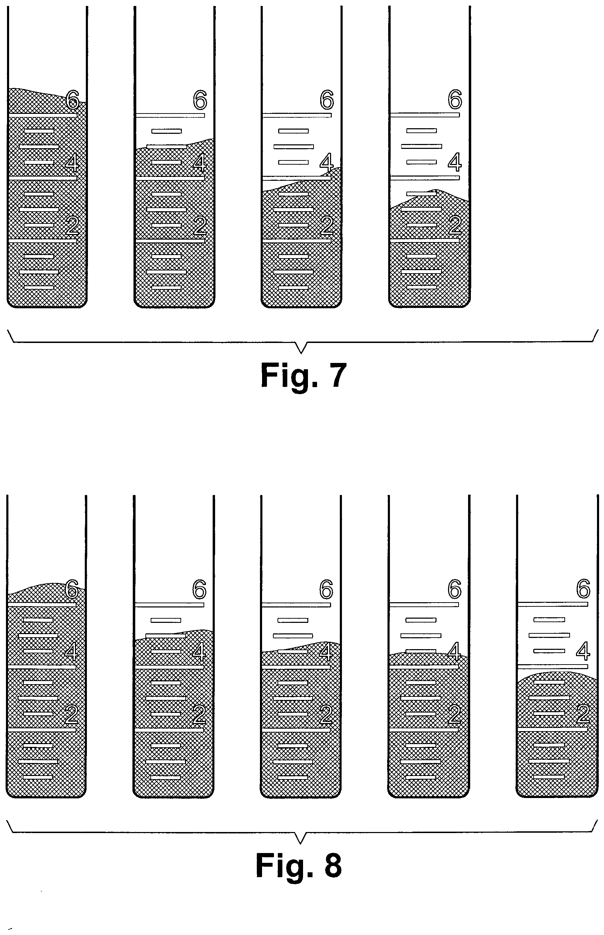

Gemäß Reaktionsvariante 1 wurde ein Rapsöl mit folgenden Ausgangsgehalten verwendet: Phosphor 1150 ppm, Calcium 370 ppm, Magnesium 146 ppm und einem Gehalt an freien Fettsäuren von 1,95 %. Das Rohöl wurde einer Vorkonditionierung mit Hilfe von wässriger Zitronensäure (1000 ppm) und wässriger Natronlauge (4 Mol/L) unterzogen. Es wurden regelmäßig Proben genommen (siehe Tabelle 5). Als Vergleich wurde eben diese Vorkonditionierung mit Zugabe eines Enzyms, Phospholipase A1 aus dem Organismus *Thermomyces lanuginosus* (Sigma-Aldrich), durchgeführt (siehe Figur 6, Tabelle 6). In Figur 7, Tabelle 7 sind Ergebnisse der Vorkonditionierung mit Zusatz des Enzyms PLA1 und eines weiteren Enzyms, einer Amylase PET aus dem Organismus *Bacillus subtilis* (ASA Spezialenzyme GmbH) dargestellt. In Figur 8, Tabelle 8 wieder derselbe Prozess unter Zusatz des Enzyms PLA1 und eines weiteren Enzyms, einer α-Amylase aus *Aspergillus* oryzae (Sigma-Aldrich)

**Tab. 5 Vorkonditionierung mit 3 % Gesamtwasseranteil, Phosphor-, Calcium-, Magnesium- und FFA Gehalt**

| **Zeit [min]** | **10** | **60** | **120** | **180** | **240** |
|---|---|---|---|---|---|
| **Ca [ppm]** | 76 | 11 | 9,5 | 9,4 | 9,5 |
| **Mg [ppm]** | 31 | 2,8 | 1,7 | 1,6 | 1,7 |
| **P [ppm]** | 247 | 20 | 14 | 13 | 14 |
| **FFA [%]** | 1,73 | | | 1,68 | 1,72 |
| **Schleimphase [%]** | 5,8 | 6,5 | 6,0 | 6,0 | 5,8 |

**Tab. 6 Vorkonditionierung mit Zugabe von PLA1 aus Thermomyces lanuginosus 0,3 Units/g Öl und 3 % Gesamtwasseranteil, Phosphor-, Calcium-, Magnesium- und FFA Gehalt**

| **Zeit [min]** | **10** | **60** | **120** | **180** | **240** |
|---|---|---|---|---|---|
| **Ca [ppm]** | 26 | 9,7 | 8,7 | 7,9 | 7,9 |
| **Mg [ppm]** | 9,7 | 2,1 | 1,8 | 1,4 | 1,5 |
| **P [ppm]** | 82 | 17 | 15 | 12 | 12 |
| **FFA [%]** | 1,76 | | | 2,35 | 2,14 |
| **Schleimphase [%]** | 6,5 | 5,6 | 5,0 | 4,5 | 5,5 |

**Tab. 7 Vorkonditionierung mit Zugabe von PLA1 0,3 Units/g Öl und Amylase PET 1 Unit/g Öl, 3 % Gesamtwasseranteil, Phosphor, Calcium-, Magnesium- und FFA Gehalt**

| **Zeit [min]** | **10** | **60** | **120** | **180** | **240** |
|---|---|---|---|---|---|
| **Ca [ppm]** | 16 | 14 | 13 | 12 | 11 |
| **Mg [ppm]** | 4,8 | 2,8 | 2,7 | 2,4 | 1,9 |
| **P [ppm]** | 38 | 21 | 19 | 15 | 13 |
| **FFA [%]** | 1,84 | | | 2,24 | 2,20 |
| **Schleimphase [%]** | 6,9 | 5,3 | 4,0 | 3,8 | 3,4 |

**Tab. 8 Vorkonditionierung mit Zugabe von PLA1 0,3 Units/g Öl und einer α-Amylase aus Aspergillus Unit/g Öl, 3 % Gesamtwasseranteil, Phosphor, Calcium-, Magnesium- und FFA Gehalt**

| **Zeit [min]** | **10** | **60** | **120** | **180** | **240** |
|---|---|---|---|---|---|
| **Ca [ppm]** | 39 | 12 | 9,3 | 8,1 | 7,1 |
| **Mg [ppm]** | 15 | 3,2 | 2,2 | 1,7 | 1,3 |
| **P [ppm]** | 130 | 25 | 19 | 14 | 10 |
| **FFA [%]** | 1,92 | | | 2,49 | 2,45 |
| **Schleimphase [%]** | 6,5 | 5,1 | 4,6 | 4,4 | 3,6 |

Wie aus Figur 5 ersichtlich ist, führt die Anwendung von Säure und Lauge auf das Rohöl als Vorkonditionierung zu einem erheblichen Volumen der Schleimphase, welches in der Folge trotz Einsatz eines Rührers bei 600 rpm nicht wesentlich abnimmt. Das einzelne Foto entspricht dabei einer Probenahme, die Probenahmen erfolgen zu den Zeitpunkten 10, 60, 120, 180 und 240 Minuten (von links nach rechts). In Tabelle 5 sind die zugehörigen analytischen Daten aufgeführt, der Phosphorgehalt sank nach 240 Minuten von 247 ppm auf 14 ppm, die Konzentration der zweiwertigen Ionen Calcium und Magnesium nimmt im Fall des Calciums von 76 ppm auf 9,5 ppm ab, die Konzentration des Magnesiums sinkt von 31 ppm auf 1,7 ppm im Verlauf der Reaktion. Der Gehalt freier Fettsäuren bleibt nahezu unverändert. Die Vorkonditionierung dient als Vorbereitungsreaktion zur Ölentschleimung und gleichzeitig als Referenzbehandlung.

In Figur 6 ist bei Verwendung des Enzyms Phospholipase A1 aus *Thermomyces lanuginosus* (Sigma-Aldrich) eine leichte Abnahme der Schleimphase im Verlauf der Reaktion erkennbar (je Messung/ Probenahme ein Foto)auf ca. 5 % am Ende der Reaktion.

Die zugehörigen Daten und die Zeitpunkte der Probenahme sind in Tabelle 6 dargestellt. Der Gehalt freier Fettsäuren steigt von 1,76 % auf 2,14 % an. Die Zunahme der freien Fettsäure ist ein Zeichen für die Aktivität der PLA1, welche die Fettsäuren aus den Phospholipidmolekülen abspaltet.
Erstaunlicherweise wurde nun gefunden, dass durch Zugabe eines Glykosid-spaltendem Enzyms zur Phospholipase die Schleimphase der Rapsölbehandlung deutlich verringert wird, siehe Figuren 7 und 8 und die dazugehörigen Daten aus Tabellen 7 und 8. In Figur 7 wurde eine Amylase PET (ASA Spezialenzyme) zugesetzt, in Figur 8 eine α-Amlyase aus Aspergillus oryzae (Sigma-Aldrich). Die Ergebnisse belegen auch hier, dass es erstaunlicherweise durch Zusatz eines weiteren Glykosid-spaltendem Enzyms zu einer schnelleren und stärkeren Reduktion der Schleimphase kommt, welches eine Steigerung der Ölausbeute bedeutet.

**Tabelle 9: Rapsöl: Gesamtölausbeute der Reaktionen aus Beispiel 2 nach Soxhlet-Extraktion der Schleimphase**

| | Ölausbeute [%] |
|---|---|
| H3Cit (Zitronensäure) | 96 |
| PLA1 | 97 |
| PLA1 + Amylase PET | 98,5 |
| PLA1 + α Amylase Aspergillus | 98 |

In Tabelle 9 ist die Gesamtölausbeute (Rapsöl) der Reaktionen aus Beispiel 2 nach Soxhlet-Extraktion der Schleimphase dargestellt. Hierbei ist ersichtlich, dass ein Glykosidspaltendes Zusatzenzym in Kombination mit der PLA1 die Ölausbeute erheblich steigert von 96 % Ausbeute bei Behandlung ohne Enzym (H3Cit) bzw. 97 % Ausbeute bei Behandlung mit dem Enzym PLA1 alleine, auf je 98% (PLA1 + α-Amylase Aspergillus) bzw. 98,5 %(PLA 1 + Amylase PET).

Es werden pro Jahr weltweit ca. 22,1 Mio Tonnen Rapsöl hergestellt (USDA FAS - 2010). Bei einer Ölausbeutesteigerung von 2-2,5 % durch den hier dargestellten enzymatischen Prozess würden ca. 440.-550.000 Tonnen mehr Rapsöl pro Jahr hergestellt werden können.

## Patentansprüche

1. Verfahren zur Verringerung der Emulgierbarkeit von Pflanzenöl in wässrigen Phasen, umfassend die Schritte:
a) in-Kontakt-Bringen des rohen Pflanzenöls mit einer Zusammensetzung umfassend eine erste Enzymkomponente umfassend mindestens ein Phospholipid-spaltendes Enzym sowie eine zweite Enzymkomponente umfassend mindestens ein nicht-Phospholipid-spaltendes Enzym wobei es sich bei der zweiten Enzymkomponente um eine α-Amylase handelt;
b) Abtrennen der Schleimstoffe von dem Pflanzenöl wobei vor dem in-Kontakt-Bringen gemäß Schritt a) das rohe Pflanzenöl mit Wasser und/oder Säure in Kontakt gebracht wird, jedoch vor Schritt a) keine Abtrennung der wässrigen Phase stattfindet, sondern das vorkonditionierte Rohöl unmittelbar in Schritt a) eingesetzt wird.

2. Verfahren gemäß einem der Ansprüche 1, wobei die erste Enzymkomponente ausgewählt wird aus der Gruppe bestehend aus Phospholipase A1, Phospholipase A2, Phospholipase C, Phospholipase B, Phospholipase D und Acyltransferase.

3. Verfahren gemäß Anspruch 2, wobei die Phospholipase A₁ aus Thermomyces lanuginosus, Fusarium oxysporium, Aspergillus oryzae, Bacillus cereus, Bacillus subtilis, Clostridium perfringens, Listeria monocytogenes, Pseudomonas spezies, Schweinepankreas oder Rinderpankreas stammt; und/oder unabhängig die Phospholipase A₂ aus Schweinepankreas, Rinderpankreas, Streptomyces violaceoruber, Naja mossambica, Thermomyces lanuginosus, Fusarium oxysporium, Aspergillus oryzae, Bacillus cereus, Bacillus subtilis, Clostridium perfringens, Listeria monocytogenes oder Pseudomonas spezies stammt; und/oder unabhängig die Phospholipase C aus Bacillus cereus, Clostridium perfringens, Listeria monocytogenes, Thermomyces lanuginosus, Fusarium oxysporium, Aspergillus oryzae, Bacillus cereus oder Pseudomonas spezies stammt; und/oder unabhängig die Phospholipase B aus Thermomyces lanuginosus, Fusarium oxysporium, Aspergillus oryzae, Bacillus cereus, Bacillus subtilis, Clostridium perfringens, Listeria monocytogenes, Pseudomonas spezies, Schweinepankreas oder Rinderpankreas stammt.

4. Verfahren gemäß Anspruch 2 oder 3, wobei die Phospholipase A₁ aus Thermomyces lanuginosus, Fusarium oxysporium stammt, und/oder unabhängig die Phospholipase A₂ aus Schweinepankreas, Rinderpankreas, Streptomyces violaceoruber oder Naja mossambica stammt, und/oder unabhängig die Phospholipase C aus Bacillus cereus, Clostridium perfringens oder Listeria monocytogenes stammt.

5. Verfahren gemäß einem der Ansprüche 1-3, wobei die alpha Amylase alpha(1-4)glykosidische, alpha(1-2)glykosidische, alpha(1-6)glykosidische, beta(1-3)glykosidische, beta(1-4)glykosidische und/oder beta(1-6)glykosidische Bindungen spaltet.

6. Verfahren gemäß einem der vorstehenden Ansprüche, wobei die alpha-Amylase eine alpha-Amylase aus Bacillus sp., Bacillus subtilis, Bacillus licheniformis, Bacillus megaterium, Bacillus amyloliquefaciens, Bacillus stearothermophilus, Pseudomonas aeroginosus, Pseudomonas fluorescens, Aspergillus oryzae, oder Aspergillus niger ist.

7. Verfahren gemäß einem der vorstehenden Ansprüche, wobei das Verhältnis der Enzymaktivität der ersten Enzymkomponente zu der Enzymaktivität der zweiten Enzymkomponente im Bereich von 0,01 : 6 units/g Öl bis 6 : 0,01 units/g Öl liegt.

8. Verfahren gemäß einem der vorstehenden Ansprüche, wobei die erste und/oder zweite Enzymkomponente in geträgerter Form vorliegt/vorliegen.

9. Verfahren gemäß einem der vorstehenden Ansprüche, wobei gleichzeitig mit den Schleimstoffen auch die erste und/oder zweite Enzymkomponente von dem Pflanzenöl abgetrennt wird.

10. Verfahren gemäß einem der vorstehenden Ansprüche wobei anstelle des Pflanzenöls Pflanzenölschleim eingesetzt wird.

## Claims

1. Method for reducing the emulsifiability of vegetable oil in aqueous phases, comprising the steps:
a) contacting the crude vegetable oil with a composition comprising a first enzyme component comprising at least one phospholipid-cleaving enzyme, and a second enzyme component comprising at least one non-phospholipid-cleaving enzyme, wherein the second enzyme component is an α-amylase;
b) separating the gums from the vegetable oil, wherein before the contacting according to step a) the crude vegetable oil is contacted with water and/or acid, but separation of the aqueous phase does not take place before step a), but rather the pre-conditioned oil is used directly in step a).

2. Method according to one of Claims 1, wherein the first enzyme component is selected from the group consisting of phospholipase A1, phospholipase A2, phospholipase C, phospholipase B, phospholipase D and acyltransferase.

3. Method according to Claim 2, wherein the phospholipse A₁ comes from Thermomyces lanuginosus, Fusarium oxysporium, Aspergillus oryzae, Bacillus cereus, Bacillus subtilis, Clostridium perfringens, Listeria monocytogenes, Pseudomonas species, porcine pancreas or bovine pancreas; and/or independently the phospholipase A₂ comes from porcine pancreas, bovine pancreas, Streptomyces violaceoruber, Naja mossambica, Thermomyces lanuginosus, Fusarium oxysporium, Aspergillus oryzae, Bacillus cereus, Bacillus subtilis, Clostridium perfringens, Listeria monocytogenes or Pseudomonas species; and/or independently the phospholipase C comes from Bacillus cereus, Clostridium perfringens, Listeria monocytogenes, Thermomyces lanuginosus, Fusarium oxysporium, Aspergillus oryzae, Bacillus cereus or Pseudomonas species; and/or independently the phospholipase B comes from Thermomyces lanuginosus, Fusarium oxysporium, Aspergillus oryzae, Bacillus cereus, Bacillus subtilis, Clostridium perfringens, Listeria monocytogenes, Pseudomonas species, porcine pancreas or bovine pancreas.

4. Method according to Claim 2 or 3, wherein the phospholipase A₁ comes from Thermomyces lanuginosus or Fusarium oxysporium, and/or independently the phospholipase A₂ comes from porcine pancreas, bovine pancreas, Streptomyces violaceoruber or Naja mossambica, and/or independently the phospholipase C comes from Bacillus cereus, Clostridium perfringens or Listeria monocytogenes.

5. Method according to one of Claims 1 to 3, wherein the alpha-amylase cleaves alpha(1-4)glycosidic, alpha(1-2)glycosidic, alpha(1-6)glycosidic, beta(1-3)glycosidic, beta(1-4)glycosidic and/or beta(1-6)glycosidic bonds.

6. Method according to one of the preceding claims, wherein the alpha-amylase is an alpha-amylase from Bacillus sp., Bacillus subtilis, Bacillus licheniformis, Bacillus megaterium, Bacillus amyloliquefaciens, Bacillus stearothermophilus, Pseudomonas aeroginosus, Pseudomonas fluorescens, Aspergillus oryzae, or Aspergillus niger.

7. Method according to one of the preceding claims, wherein the ratio of the enzyme activity of the first enzyme component to the enzyme activity of the second enzyme component is in the range of from 0.01 : 6 units/g oil to 6 : 0.01 units/g oil.

8. Method according to one of the preceding claims, wherein the first and/or second enzyme component is/are present in supported form.

9. Method according to one of the preceding claims, wherein the first and/or second enzyme component is also separated from the vegetable oil at the same time as the gums.

10. Method according to one of the preceding claims, wherein vegetable oil gum is used instead of vegetable oil.

## Revendications

1. Procédé de réduction de l'émulsibilité d'une huile végétale dans des phases aqueuses, comprenant les étapes suivantes :
a) la mise en contact de l'huile végétale brute avec une composition comprenant un premier composant enzymatique comprenant au moins une enzyme clivant les phospholipides et un deuxième composant enzymatique comprenant au moins une enzyme clivant les non-phospholipides, le deuxième composant enzymatique étant une α-amylase ;
b) la séparation des substances mucilagineuses de l'huile végétale, l'huile végétale brute étant mise en contact avec de l'eau et/ou un acide avant la mise en contact selon l'étape a), mais aucune séparation de la phase aqueuse n'ayant toutefois lieu avant l'étape a), l'huile brute pré-conditionnée étant plutôt utilisée directement dans l'étape a).

2. Procédé selon l'une quelconque des revendications 1, dans lequel le premier composant enzymatique est choisi dans le groupe constitué par la phospholipase A1, la phospholipase A2, la phospholipase C, la phospholipase B, la phospholipase D et l'acyltransférase.

3. Procédé selon la revendication 2, dans lequel la phospholipase A₁ est issue de Thermomyces lanuginosus, Fusarium oxysporium, Aspergillus oryzae, Bacillus cereus, Bacillus subtllis, Clostridium perfringens, Lrsteria monocytogenes, d'espèces Pseudomonas, de pancréas porcin ou de pancréas bovin ; et/ou, indépendamment, la phospholipase A₂ est issue de pancréas porcin, de pancréas bovin, de Streptomyces violaceoruber, Naja mossambica, Thermomyces lanuginosus, Fusarium oxysporium, Aspergillus oryzae, Bacillus cereus, Bacillus subtilis, Clostridium perfringens, Usteria monocytogenes ou d'espèces Pseudomonas ; et/ou, indépendamment, la phospholipase C est issue de Bacillus cereus, Clostridium perfringens, Listeria monocytogenes, Thermomyces lanuginosus, Fusarium oxysporium, Aspergillus oryzae, Bacillus cereus ou d'espèces Pseudomonas ; et/ou, indépendamment, la phospholipase B est issue de Thermomyces lanuginosus, Fusarium oxysporium, Aspergillus oryzae, Bacillus cereus, Bacillus subtilis, Clostridium perfringens, Listeria monocytogenes, d'espèces Pseudomonas, de pancréas porcin ou de pancréas bovin.

4. Procédé selon la revendication 2 ou 3, dans lequel la phospholipase A₁ est issue de Thermomyces lanuginosus ou Fusarium oxysporium, et/ou, indépendamment, la phospholipase A₂ est issue de pancréas porcin, de pancréas bovin, de Streptomyces violaceoruber ou Naja mossambica, et/ou, indépendamment, la phospholipase C est issue de Bacillus cereus, Clostridium perfringens ou Listeria monocytogenes.

5. Procédé selon l'une quelconque des revendications 1 à 3, dans lequel l'alpha-amylase clive les liaisons alpha(1-4)glycosidiques, alpha(1-2)glycosidiques, alpha(1-6)glycosidiques, beta(1-3)glycosidiques, beta(1-4)glycosidiques et/ou beta(1-6)glycosidiques.

6. Procédé selon l'une quelconque des revendications précédentes, dans lequel l'alpha-amylase est une alpha-amylase de Bacillus sp., Bacillus subtilis, Bacillus licheniformis, Bacillus megaterium, Bacillus amyloliquefaciens, Bacillus stearothermophilus, Pseudomonas aeroginosus, Pseudomonas fluorescens, Aspergillus oryzae ou Aspergillus niger.

7. Procédé selon l'une quelconque des revendications précédentes, dans lequel le rapport entre l'activité enzymatique du premier composant enzymatique et l'activité enzymatique du deuxième composant enzymatique se situe dans la plage allant de 0,01:6 unités/g d'huile à 6:0,01 unités/g d'huile.

8. Procédé selon l'une quelconque des revendications précédentes, dans lequel le premier et/ou le deuxième composant enzymatique se présentent sous forme supportée.

9. Procédé selon l'une quelconque des revendications précédentes, dans lequel le premier et/ou le deuxième composant enzymatique sont séparés de l'huile végétale simultaménent avec les substances mucilagineuses.

10. Procédé selon l'une quelconque des revendications précédentes, dans lequel un mucilage d'huile végétale est utilisé au lieu de l'huile végétale.
